# EUROPEAN PATENT SPECIFICATION

(11) **EP 4 279 786 B1**
(45) Date of publication and mention of the grant of the patent: **17.09.2025**
(21) Application number: 23174359.2
(22) Date of filing: 19.05.2023
(51) Int. Cl.: F16L 23/06, F16B 2/18, F16L 33/12, E05C 19/14, E05B 17/00

(54) **METHOD OF ASSEMBLING A LATCHING ASSEMBLY, LATCHING ASSEMBLY, LATCH, BAND CLAMP AND KIT OF PARTS FOR THE LATCHING ASSEMBLY**
VERFAHREN ZUR MONTAGE EINER VERRIEGELUNGSANORDNUNG,VERRIEGLUNGSANORDNUNG, VERRIEGELUNG, KLEMMBAND UND SATZ VON TEILEN FÜR DIE VERRIEGELUNGSANORDNUNG
PROCÉDÉ D'ASSEMBLAGE D'UN ENSEMBLE DE VERROUILLAGE, ENSEMBLE DE VERROUILLAGE, VERROU, COLLIER DE SERRAGE ET KIT DE PIECES POUR L'ENSEMBLE DE VERROUILLAGE

(30) Priority: 20.05.2022 GB 202207440
(43) Date of publication of application: 22.11.2023
(73) Proprietor: Howard S. Cooke & Co. Limited, Redditch Worcestershire B98 8PA (GB)
(72) Inventor: Bourne, John Francesco, Bromsgrove (GB)
(74) Representative: Wynne-Jones IP Limited

(56) References cited:
- EP-A2- 0 232 585
- US-A- 2 920 370
- US-A- 4 522 436

## Description

### Field of the Invention

The present invention relates to a method of assembling a latching assembly. The present invention also relates to a method of assembling a latch. In particular, but not exclusively, the latch is an over-centre latch. The present invention also relates to a method of assembling a band clamp. The present invention also relates to a latching assembly, to a latch and to a band clamp. The present invention also relates to a kit of parts of a latching assembly.

### Background of the Invention

A band clamp is a holding device comprising a band (e.g. of metal) formed into a loop, with a mechanism to forcibly adjust the diameter, to exert a clamping force on an object within the loop.

A known type of band clamp is a hose clamp (typically referred to as a 'Jubilee Clip') that comprises a band with a screw thread pattern cut or pressed into the band. One end of the band is provided with a captive screw. When the screw is turned, it acts as a worm drive, pulling the threads of the band, causing the band to tighten (e.g. around a hose that is to be clamped) .

For delivery, suction, hydraulic or agricultural applications requiring a very tight seal, a more heavy-duty solution was required giving rise to a bolt and barrel type of clamp. In this type of clamp, the diameter of the band is adjustable by a threaded bolt, mounted to the ends of the band, and a screw member that can be screwed and unscrewed along the bolt to adjust the diameter of the band.

However, in relation to both the hose clip/Jubilee clip and the bolt and barrel heavy-duty clamp, the adjustment of the diameter of the band, to exert or remove said clamping force, is slow and laborious, as it is necessary to screw/unscrew the screw member along the thread in order to adjust the diameter of the band. This is particularly a problem where it is necessary to frequently clamp and unclamp an object, in use.

In view of this, 'quick release' band clamps were developed, comprising a latching assembly comprising a lever, pivotally mounted to a band, such that the lever is pivotable between an unlatched position and a latched position, and a latching part, pivotally mounted to the lever such that the latching assembly is operable between an unlatched configuration and a latched configuration, by pivoting the lever between its unlatched and latched positions respectively. The latching part is arranged with the band such that the diameter of the band is adjustable between an unlatched diameter and a latched diameter, that is less than the unlatched diameter, by operation of the latching assembly between its unlatched and latched configurations respectively.

However, known quick release band clamps are difficult to manufacture in a way that does not reduce the overall strength and integrity of the clamp.

Corresponding problems also exist for latches in general, that comprise a latching assembly and an engagement member (e.g. a catch plate or other suitable member), where the latching assembly is for attachment to a first body and the engagement member is for attachment to a second body, and wherein the latching part is configured to co-operate with the engagement member such that when the latching assembly is in its unlatched and latched configurations, the first and second bodies are unlatched from each other and latched to each other respectively. This is particularly the case for over-centre latches. Example of such latches include a hook latch, barrel nut latch, toggle latch and draw latch.

The present invention seeks to address or mitigate at least some of the above-mentioned problems. Alternatively, or additionally, the present invention seeks to provide an improved method of assembling a latching assembly. Alternatively, or additionally, the present invention seeks to provide an improved method of assembling a latch, in particular, but not exclusively, an over-centre latch. Alternatively, or additionally, the present invention seeks to provide an improved method of assembling a band clamp. Alternatively, or additionally, the present invention seeks to provide an improved latching assembly. Alternatively, or additionally, the present invention seeks to provide an improved latch. Alternatively, or additionally, the present invention seeks to provide an improved band clamp. In each of the above the latching assembly, latch or band clamp is in particular for use in heavy-duty applications.
US 2920370 (GUY GRANVILLE M) relates to an overcenter latching apparatus, and more, particularly relates to an overcenter latch with particular utility in co-operation with clamping or coupling devices employed with hoses, tubing, and the like.
EP0232585 (COOKE HOWARD S & CO LTD) relates to an adjustable toggle fastener having pivot pins connected by a screw so that their spacing can be varied.

### Summary of the Invention

According to a first aspect of the invention there is provided a method of assembling a latching assembly comprising:
- providing a lever;
- pivotally mounting the lever such that the lever is pivotable between an unlatched position and a latched position;
- pivotally mounting a latching part to the lever such that the latching assembly is operable between an unlatched configuration and a latched configuration, by pivoting the lever between its unlatched and latched positions respectively;
- wherein the lever comprises first and second side members, the first and second side members being spaced apart and having opposed inner sides, wherein, in respect of each side member, a receiving space is provided in the side member, extending depth-wise from an inner side, at the inner side of the side member, at least part way towards an outer side of the side member and wherein at least one of the receiving spaces is a loading slot that extends length-wise from a first end to a second end;
- wherein the lever or latching part is so pivotally mounted by a method comprising:
   ∘providing a pivot, the pivot having first and second mounting members;
   ∘ receiving at least part of the first mounting member in the receiving space in the first side member;
   ∘receiving at least part of the second mounting member in the receiving space in the second side member;
   ∘ wherein, in respect of each mounting member, the at least part of the mounting member is received in the receiving space through the inner side of the receiving space and/or, where the receiving space is a said loading slot and if at least one of the first and second ends of the loading slot is an open end, through a said open end;
   ∘ and, in respect of each mounting member, locating the mounting member in a mounting position;
   ∘ wherein, in respect of at least one loading slot, the respective mounting member is located in the mounting position by movement of the mounting member relative to the loading slot such that the at least part of the mounting member, received in the loading slot, is moved at least part way along the length of the loading slot;
   ∘ and wherein, in respect of at least one loading slot, the method comprises arranging a retainer with the respective mounting member such that the mounting member is substantially retained, in the length-wise direction of the slot, in the mounting position; and
   ∘ mounting the first and second mounting members of the pivot to first and second side portions of the lever, respectively.

The at least one loading slot may allow the pivot to be mounted to the lever without having to splay apart the first and second side members of the lever. This may allow the side members of the lever to be relatively rigid (compared to if they needed to be splayed open). The retainer allows for the at least one loading slot to be used, as it substantially retains the mounting member in the length-wise direction of the loading slot, in its mounting position. This prevents unintended movement of the mounting member in the length-wise direction of the slot during use.

In respect of the, one of, or both loading slot(s), the first and second ends of the loading slot may be closed. In this case the at least part of the respective mounting member may be received in the loading slot through the inner side of the loading slot. Alternatively, or additionally, in respect of the, one of, or both loading slot(s), at least one of the first and second ends of the loading slot(s) may be an open end. In this case, the at least part of the respective mounting member may be received in the loading slot through the inner side of the loading slot and/or through said open end.

In embodiments of the invention, the first and second mounting members are respectively mounted to the first and second side portions of the lever such that the respective lever or latching part is so pivotally mounted. The pivotal mounting may be such that the respective lever or latching part pivots about a pivot axis. The pivot axis may be a longitudinal axis of the pivot.

Where the latching part is pivotally mounted by said method, the method may comprise mounting the latching part to the pivot such that the latching part pivots about the pivot axis.

The first and second mounting members may be respectively mounted to the first and second side portions of the lever such that they are rotationally fixed relative to the respective side portion, about said pivot axis.

Alternatively, the first and second mounting members may be respectively mounted to the first and second side portions of the lever such that they are rotatable, relative to the respective side portion, about said pivot axis.

For example, where the lever is pivotally mounted by said method, the first and second mounting members of the pivot may be mounted to the first and second side portions of the lever, respectively, such that they are rotationally fixed relative to the respective side portion, about said pivot axis.

Where the latching part is pivotally mounted by said method, the first and second mounting members of the pivot may be mounted to the first and second side portions of the lever, respectively, such that they are rotatable relative to the respective side portion, about said pivot axis.

It will be appreciated that the steps of the method may be carried out in any order. For example, the at least part of the first and second mounting members may be first received in the first and second receiving spaces at the same or different times. Where they are first received in the receiving spaces at different times, the at least part of the first mounting member may be received in the first receiving space before or after the at least part of the second mounting member is received in the second receiving space. Furthermore, the latching part may be pivotally mounted to the lever before, or after, the lever is pivotally mounted.

Optionally the first receiving space is a first said loading slot and the second receiving space is a second said loading slot.

In this case, the method may comprise, in respect of each mounting member, the at least part of the mounting member being received in the loading slot through the inner side and/or through the first or second end of the loading slot, if said first or second end is an open end. The method may comprise, in respect of each loading slot, locating the at least part the mounting member, received in the slot, in a mounting position in the slot and arranging the mounting member with a respective retainer such that the at least part of the mounting member is substantially retained, in the length-wise direction of the slot, in the mounting position.

Optionally in respect of each loading slot, the method comprises arranging a retainer with the respective mounting member such that the mounting member is substantially retained, in the length-wise direction of the slot, in the mounting position.

Each retainer may comprise a respective said retaining side plate, attached to the outer side of the respective side member.

Optionally each receiving space (e.g. each loading slot) extends generally in a plane. The planes of the receiving spaces may be generally parallel to each other. Optionally each side member extends generally in a plane. The planes of the side members may be substantially parallel to each other. Each receiving space (e.g. each loading slot) may extend generally in the plane of the respective side member.

Optionally the first end of each loading slot is an open end and the method comprises receiving the at least part of each mounting member in the respective loading slot through the first end of the loading slot, or the second end of each loading slot is an open end and the method comprises receiving the at least part of each mounting member in the respective loading slot through the second end of the loading slot.

In this case, the pivot may be oriented such that its longitudinal axis is substantially perpendicular to the planes of the side members, as the first and second mounting members are received through said open ends of the first and second loading slots respectively.

Optionally the method comprises receiving the at least part of the first mounting member in the first receiving space and the at least part of the second mounting member in the second receiving space by orienting the pivot relative to the lever such that the longitudinal axis of the pivot is inclined at an oblique angle relative to the planes of the side members.

Optionally the method comprises receiving the at least part of one mounting member in the respective receiving space and pivoting the pivot about the mounting member such that the other mounting member is located in its mounting position in the other receiving space.

In respect of the first and/or second loading slots, the first and second ends of the loading slot may be closed.

The first and second mounting members may be first received in the respective receiving spaces at substantially the same time. Alternatively, the first and second mounting members may be first received in the respective receiving spaces at different times, i.e. one after the other.

The first and second loading slots may have any of said features of the loading slot. It will be appreciated that the first and second loading slots may have the same or different configurations. For example, one or both of the loading slots may have closed first and second ends. Alternatively, or additionally, one or both of the loading slots may have a said first and/or second end that is an open end.

Optionally one of the receiving spaces is a said loading slot and the other is an aperture.

Optionally the receiving space in the first side member and/or the receiving space in the second side member extends to the outer side of the respective side member. In this respect, the receiving space may extend through the entire thickness of the side member. The receiving space may extend to an outer side, at the outer side of the side member, with the outer side (and the inner side) of the receiving space being an open side.

In embodiments of the invention the, or each, loading slot has a greater length than the extent of the at least part of the mounting member received in the loading slot, in the length-wise direction of the slot.

Optionally the step of arranging the respective mounting member with the retainer comprises attaching a retaining side plate to the outer side of the side member that is provided with the loading slot, the at least part of the mounting member received in the loading slot is a first part of the mounting member and a second part of the mounting member is received in an aperture in the retaining side plate such that the mounting member is substantially retained, in the length-wise direction of the loading slot, in the mounting position.

Optionally first and second said retaining side plates are attached to the outer side of the first and second side members respectively and wherein a second part of each mounting member is received in an aperture in a respective retaining side plate such that the mounting member is substantially retained, in the length-wise direction of the loading slot, in the mounting position.

Optionally the retaining side plate is attached to the outer side of the side member before the mounting member is located in said mounting position and wherein the mounting member is located in said mounting position by movement of the mounting member relative to the loading slot such that the first part of the mounting member, received in the loading slot, is moved at least part way along the length of the slot and, as it does so, the mounting member abuts against an inner side of the retaining side plate, causing the retaining side plate to flex outwardly, away from the outer side of the side member, such that the first part of the mounting member is able to so move along the loading slot and when the mounting member is located in said mounting position, the retaining side plate unflexes such that the second part of the mounting member is so received in the aperture in the retaining side plate.

This may provide for ease of assembly as the retaining side plate essentially 'clicks onto' the second part of the mounting member, once it is located in the mounting position.

Optionally the retaining side plate is attached to the outer side of the side member after, or as, the mounting member is located in said mounting position.

Optionally the latching part comprises a first engagement member for co-operating with a second engagement member such that a latching force is exerted on, and removed from, the second engagement member when the latching assembly is in the latched and unlatched configurations respectively.

Optionally the first engagement member is configured to co-operate with the second engagement member such that the latching assembly and the second engagement member form an over-centre latch.

Optionally the latching assembly is for attachment to a first body and the second engagement member is for attachment to a second body such that when the latching assembly is in the unlatched and latched configurations, the first and second bodies are unlatched from each other and latched to each other respectively.

According to a second aspect of the invention there is provided a method of assembling a latch comprising assembling a latching assembly according to the method of the first aspect of the invention and providing a said second engagement member.

Optionally the lever is pivotally mounted about a first pivot axis and the latching part is pivotally mounted about a second pivot axis, wherein the second pivot axis is located on an opposite side of the first pivot axis, to the first engagement member, when the latching assembly is in its latched configuration.

Optionally the first pivot axis is located proximal a first end of the lever and the second pivot axis is located between the first pivot axis and a second end of the lever.

According to a third aspect of the invention there is provided a method of assembling a band clamp comprising:
- assembling a latching assembly according to the method of the first aspect of the invention;
- wherein the lever is pivotally mounted to a band and the latching part is arranged with the band such that the diameter of the band is adjustable between an unlatched diameter and a latched diameter, that is less than the unlatched diameter, by operation of the latching assembly between its unlatched and latched configurations respectively.

Optionally the first and second engagement members are arranged such that the diameter of the band is adjustable between an unlatched diameter and a latched diameter, that is less than the unlatched diameter, by operation of the latching assembly between its unlatched and latched configurations respectively.

Optionally the second engagement member is mounted to the band. Optionally the lever is pivotally mounted to the band at a first location on the band and the second engagement member is mounted to the band at a second location on the band.

Optionally:
- the receiving space provided in the first side member and the receiving space provide in the second side member are each provided in a first part of the respective side member;
- a receiving space is provided in a second part of each of the first and second side members;
- each receiving space, that is provided in the second part of a side member, extending depth-wise from an inner side, at the inner side of the side member, at least part way towards an outer side of the side member and wherein at least one receiving space, that is provided in the second part of a side member, is a loading slot that extends length-wise from a first end to a second end;
- the pivot is a first pivot;
- and wherein the other of the lever or latching part is so pivotally mounted by a method comprising:
   ∘ providing a second pivot, the second pivot having first and second mounting members;
   ∘ receiving at least part of the first mounting member of the second pivot in the receiving space in the second part of the first side member;
   ∘receiving at least part of the second mounting member of the second pivot in the receiving space in the second part of the second side member;
   ∘ wherein, in respect of each mounting member of the second pivot, the at least part of the mounting member is received in the receiving space through the inner side of the receiving space and/or, where the receiving space is a said loading slot and if at least one of the first and second ends of the loading slot is an open end, through a said open end;
   ∘ and, in respect of each mounting member of the second pivot, locating the mounting member in a mounting position;
   ∘ wherein, in respect of at least one loading slot provided in the second part of a side member, the respective mounting member is located in the mounting position by movement of the mounting member relative to the loading slot such that the at least part of the mounting member, received in the loading slot, is moved at least part way along the length of the loading slot;
   ∘ and wherein, in respect of at least one loading slot provided in the second part of a side member, the method comprises arranging a retainer with the respective mounting member such that the mounting member is substantially retained, in the length-wise direction of the slot, in the mounting position; and
   ∘ mounting the first and second mounting members of the second pivot to first and second side portions of the lever, respectively.

Optionally the lever is pivotally mounted to the band by providing a pivot and mounting first and second mounting members of the pivot to first and second side portions of the lever respectively, wherein the pivot comprises a body, provided between the first and second mounting members, and wherein a passage is provided in the body, configured such that when the latching assembly is in the latched configuration, the latching part passes through the passage.

This may allow for the pivot to be relatively strong and robust, as it is mounted to the first and second side portions of the lever, whilst still allowing for the latching part to move to its necessary position (e.g. an over-centre position) when the latching assembly is in the latched configuration.

Optionally the lever is so pivotally mounted by said method of pivotal mounting and wherein at least one loading slot and the at least part of the mounting member, received in the loading slot, of the pivot, are configured such that when the mounting member is located in the mounting position, the pivot is oriented such that when the latching assembly is in the latched configuration, the latching part passes through the passage.

This may provide for ease of assembly, as it facilitates the loading of the pivot into the lever in the correct orientation.

Optionally the passage is configured such that, when the latching part is received in the passage, the pivot acts as a stop to prevent the latching part going past an over-centre position.

This may prevent the latching force, exerted when the latching assembly is in the latched configuration, from being reduced due to the latching part going past the over-centre position.

Optionally the pivot is made from a single piece of material.

This may allow for the pivot to be relatively strong and robust and may provide for ease of assembly.

Optionally the latching part comprises a thread and wherein a diameter adjustment member is arranged with the latching part such that the latched diameter of the band is adjustable by screwing the diameter adjustment member along the thread.

Optionally a part of the band clamp is mounted in a looped section of the band.

This may allow the band to be relatively strong and robust, as it avoids having to insert a fastener into the band, which could reduce the strength and integrity of the band.

The part of the band clamp may comprise a said pivot, for example the pivot that pivotally mounts the lever to the band. The part of the band clamp may comprise said second engagement member.

Optionally the first and second side portions of the lever comprise the first and second side members of the lever respectively.

Where a retaining side plate is attached to an outer side of a side member, the respective side portion of the lever (i.e. that the respective mounting member of the pivot is mounted to) may comprise the retaining side plate and/or the side member. In this respect, the mounting member may be mounted to the retaining side plate and/or the side member. It will be appreciated that, when the retaining side plate is attached to the side member, the retaining side plate forms part of the respective side portion of lever. The mounting member may be mounted to the side member by the retaining side plate (i.e. the mounting member is mounted to the retaining side plate, which is mounted to the side member).

Where no retaining side plate is attached to an outer side of a side member, the respective side portion of the lever (i.e. that the respective mounting member of the pivot is mounted to) may be the respective side member of the lever.

It will be appreciated that the steps of the methods in any of the aspects of the invention are not limited to the order presented and may be carried out in any order.

According to a fourth aspect of the invention there is provided a latching assembly comprising:
- a lever, pivotally mounted such that it is pivotable between an unlatched position and a latched position;
- a latching part, pivotally mounted to the lever such that the latching assembly is operable between an unlatched configuration and a latched configuration, by pivoting the lever between its unlatched and latched positions respectively;
- wherein the lever comprises first and second side members, the first and second side members being spaced apart and having opposed inner sides, wherein, in respect of each side member, a receiving space is provided in the side member, extending depth-wise from an inner side, at the inner side of the side member, at least part way towards an outer side of the side member and wherein at least one of the receiving spaces is a loading slot that extends length-wise from a first end to a second end;
- and wherein the latching assembly comprises a pivot having first and second mounting members, the lever or latching part is so pivotally mounted by the pivot, wherein the pivot is configured, with the at least one loading slot, such that the respective lever or latching part may be so pivotally mounted by a method comprising:
   ∘ receiving at least part of the first mounting member in the receiving space in the first side member;
   ∘ receiving at least part of the second mounting member in the receiving space in the second side member;
   ∘ wherein, in respect of each mounting member, the at least part of the mounting member is received in the receiving space through the inner side of the receiving space and/or, where the receiving space is a said loading slot and if at least one of the first and second ends of the loading slot is an open end, through a said open end;
   ∘ and, in respect of each mounting member, locating the mounting member in a mounting position;
   ∘ wherein, in respect of at least one loading slot, the respective mounting member is located in the mounting position by movement of the mounting member relative to the loading slot such that the at least part of the mounting member, received in the loading slot, is moved at least part way along the length of the loading slot;
- and wherein, in respect of at least one loading slot, the latching assembly comprises a retainer arranged with the respective mounting member such that the mounting member is substantially retained, in the length-wise direction of the slot, in the mounting position; and
- the first and second mounting members of the pivot are mounted to first and second side portions of the lever, respectively.

In embodiments of the invention, the pivot extends length-wise from an outer end of the first mounting member to an outer end of the second mounting member, wherein the length of the pivot relative to the length of the at least one loading slot and the distance between the inner sides of the first and second side members is such that the at least part of each mounting member is receivable in the respective receiving space through the inner side of the receiving space and/or, where the receiving space is a said loading slot and if at least one of the first and second ends of the loading slot is an open end, through a said open end.

In embodiments of the invention the at least part of the mounting member is received in, or is receivable in, the loading slot at a loading position and wherein the length of the pivot is greater than the distance between the inner sides of the side members, at the loading position. Optionally the length of the pivot is greater than the distance between the inner sides of side members, along the length of the loading slot from the loading position to the mounting position. The loading position may be at an end of the, or each, loading slot.

In embodiments of the invention where the retainer is a said retaining side plate, the length of the pivot is greater than the distance between the outer sides of the side members, at the mounting position.

The method referred to in the fourth aspect of the invention may have any of the features of the method of any other aspect of the invention.

Optionally the retainer comprises a retaining side plate attached to the outer side of the side member that is provided with the loading slot, the at least part of the mounting member received in the loading slot is a first part of the mounting member and a second part of the mounting member is received in an aperture in the retaining side plate such that the mounting member is substantially retained, in the length-wise direction of the loading slot, in the mounting position.

Optionally the retaining side plate, the side members and the pivot are configured such that where the mounting member is located in said mounting position by movement of the mounting member relative to the loading slot such that the first part of the mounting member, received in the loading slot, is moved at least part way along the length of the slot, the mounting member abuts against an inner side of the retaining side plate, causing the retaining side plate to flex outwardly, away from the outer side of the side member, such that the first part of the mounting member is able to so move along the loading slot and when the mounting member is located in said mounting position, the retaining side plate unflexes such that the second part of the mounting member is so received in the aperture in the retaining side plate.

In this respect, an inner side of the retaining side plate may be attached to the outer side of the side member at one or more discrete locations, wherein a region of the inner side of the retaining side plate is not attached to the outer side of the side member such that the retaining side plate can so flex outwardly, away from the outer side of the side member.

The retaining side plate may be more flexible, in the outward direction, away from the outer side of side member, than the side member. In this respect, the retaining side plate may be made of a material that is more flexible than the material that the side member is made out of. Alternatively, or additionally, the retaining side plate may be thinner than the side member.

The retaining side plate may be made of a flexible material. The retaining side plate may be made of a resiliently deformable material.

The lever may comprise a user operable handle configured such that a user can operate the handle to pivot the lever between its latched and unlatched positions.

Optionally the latching part comprises a first engagement member for co-operating with a second engagement member such that a latching force is exerted on, and removed from, the second engagement member when the latching assembly is in the latched and unlatched configurations respectively.

Optionally the first engagement member is configured to co-operate with the second engagement member such that the latching assembly and the second engagement member form an over-centre latch.

Optionally the latching assembly is for attachment to a first body and the second engagement member is for attachment to a second body such that when the latching assembly is in the unlatched and latched configurations, the first and second bodies are unlatched from each other and latched to each other respectively.

According to a fifth aspect of the invention there is provided a latch comprising a latching assembly according to the fourth aspect of the invention and a said second engagement member.

According to a sixth aspect of the invention there is provided a band clamp comprising:
- a latching assembly according to the fourth aspect of the invention;
- wherein the lever is pivotally mounted to a band and the latching part is arranged with the band such that the diameter of the band is adjustable between an unlatched diameter and a latched diameter, that is less than the unlatched diameter, by operation of the latching assembly between its unlatched and latched configurations respectively.

Optionally:
- the receiving space provided in the first side member and the receiving space provide in the second side member are each provided in a first part of the respective side member;
- a receiving space is provided in a second part of each of the first and second side members;
- each receiving space, that is provided in the second part of a side member, extending depth-wise from an inner side, at the inner side of the side member, at least part way towards an outer side of the side member and wherein at least one receiving spaces, that is provided in the second part of a side member, is a loading slot that extends length-wise from a first end to a second end;

- the pivot is a first pivot;
- and wherein the other of the lever or latching part is so pivotally mounted by a second pivot having first and second mounting members and configured, with the at least one loading slot provided in the second part of a side member, such that said other of the lever or latching part may be so pivotally mounted by a method comprising:
   ∘ receiving at least part of the first mounting member of the second pivot in the receiving space in the second part of the first side member;
   ∘ receiving at least part of the second mounting member of the second pivot in the receiving space in the second part of the second side member;
   ∘ wherein, in respect of each mounting member of the second pivot, the at least part of the mounting member is received in the receiving space through the inner side of the receiving space and/or, where the receiving space is a said loading slot and if at least one of the first and second ends of the loading slot is an open end, through a said open end;
   ∘ and, in respect of each mounting member of the second pivot, locating the mounting member in a mounting position;
   ∘ wherein, in respect of at least one loading slot provided in the second part of a side member, the respective mounting member is located in the mounting position by movement of the mounting member relative to the loading slot such that the at least part of the mounting member, received in the loading slot, is moved at least part way along the length of the loading slot;
   ∘ and wherein, in respect of at least one loading slot provided in the second part of a side member, the method comprises arranging a retainer with the respective mounting member such that the mounting member is substantially retained, in the length-wise direction of the slot, in the mounting position; and
   ∘ mounting the first and second mounting members of the second pivot to first and second side portions of the lever, respectively.

Optionally the lever is pivotally mounted to the band by a pivot comprising first and second mounting members that are mounted to first and second side portions of the lever respectively, wherein the pivot comprises a body, provided between the first and second mounting members, and wherein a passage is provided in the body, configured such that when the latching assembly is in the latched configuration, the latching part passes through the passage.

Optionally the lever is so pivotally mounted by said pivot and wherein at least one loading slot and the at least part of the mounting member, of the pivot, received in the loading slot, are configured such that when the mounting member is located in the mounting position, the pivot is oriented such that when the latching assembly is in the latched configuration, the latching part passes through the passage.

Optionally the passage is configured such that, when the latching part is received in the passage, the pivot acts as a stop to prevent the latching part going past an over-centre position of the latching assembly.

Optionally the pivot is made from a single piece of material.

Optionally the latching part comprises a thread and wherein a diameter adjustment member is arranged with the latching part such that the latched diameter of the band is adjustable by screwing the diameter adjustment member along the thread.

Optionally a part of the band clamp is mounted in a looped section of the band.

Optionally the method comprises pivotally mounting the lever to a pivot mount.

Optionally the lever is pivotally mounted to a pivot mount.

The pivot mount may be mounted on, or part of the band.

Optionally the latch comprises a base. The pivot mount may be mounted on, or part of, the base. The base may be for attachment to the first body.

According to a seventh aspect of the invention there is provided a kit of parts of a latching assembly comprising:
- a lever, for being pivotally mounted such that it is pivotable between an unlatched position and a latched position;
- a latching part, for being pivotally mounted to the lever such that the latching assembly is operable between an unlatched configuration and a latched configuration, by pivoting the lever between its unlatched and latched positions respectively;
- wherein the lever comprises first and second side members, the first and second side members being spaced apart and having opposed inner sides, wherein, in respect of each side member, a receiving space is provided in the side member, extending depth-wise from an inner side, at the inner side of the side member, at least part way towards an outer side of the side member and wherein at least one of the receiving spaces is a loading slot that extends length-wise from a first end to a second end;
- a pivot having first and second mounting members and configured, with the at least one loading slot, such that the respective lever or latching part may be so pivotally mounted by a method comprising:
   ∘ receiving at least part of the first mounting member in the receiving space in the first side member;
   ∘ receiving at least part of the second mounting member in the receiving space in the second side member;
   ∘ wherein, in respect of each mounting member, the at least part of the mounting member is received in the receiving space through the inner side of the receiving space and/or, where the receiving space is a said loading slot and if at least one of the first and second ends of the loading slot is an open end, through a said open end;
   ∘ and, in respect of each mounting member, locating the mounting member in a mounting position;
   ∘ wherein, in respect of at least one loading slot, the respective mounting member is located in the mounting position by movement of the mounting member relative to the loading slot such that the at least part of the mounting member, received in the loading slot, is moved at least part way along the length of the loading slot;
- and, in respect of at least one loading slot, a retainer for being arranged with the respective mounting member such that the mounting member is substantially retained, in the length-wise direction of the slot, in the mounting position.

The features of any of the above aspects of the invention may be combined with one or more features of any of the other aspects of the invention, in any combination.

Other preferred and advantageous features of the invention will be apparent from the following description.

### Description of the Drawings

A specific embodiment of the invention will now be described with reference to the description and drawings.
Figure 1 shows a side view of a quick release band clamp according to a first embodiment of the invention, where a latching assembly of the band clamp is in a latched configuration;
Figure 2 shows a view from below of the quick release band clamp shown in Figure 1, where a band of the band clamp is shown as transparent for illustrative purposes;
Figure 3 shows a view from a rear end of the quick release band clamp shown in Figure 1;
Figure 4 shows a view from the front end of the quick release band clamp shown in Figure 1;
Figure 5 shows a perspective view of the quick release band clamp shown in Figure 1;
Figure 6 shows a view corresponding to that of Figure 5, but where the latching assembly is in an unlatched configuration;
Figure 7a shows a schematic view of the side members and retaining side plates of the latching assembly of the band clamp shown in Figure 1 to 6, illustrating the outward flexing of the retaining side plates as a front pivot is moved along front loading slots in the side members;
Figure 7b shows a schematic view corresponding to that of Figure 7a but illustrating the outward flexing of the retaining side plates as a rear pivot is moved along rear loading slots in the side members;
Figures 8a to 8b shows an exploded/assembled perspective view of the latching assembly of a quick release band clamp according to a second embodiment of the invention, to illustrate the steps in the method of assembling the latching assembly;
Figure 9 shows a perspective view of a latching assembly, of an over-centre latch, according to a third embodiment of the invention, where the latching assembly is in a latched configuration;
Figure 10 shows a view from below of the latching assembly shown in Figure 9;
Figure 11 shows a side view of the latching assembly shown in Figures 9 and 10;
Figure 12 shows a top down view of a latch comprising the latching assembly shown in Figures 9 to 11 and a catch for engagement by the latching assembly;
Figure 13 shows a rear view of the latching assembly shown in Figures 9 to 12;
Figure 14 shows a front view of the latching assembly shown in Figures 9 to 13;
Figure 15 shows a front perspective view of the latching assembly shown in Figures 9 to 14, where the latching assembly is in an unlatched configuration;
Figure 16 shows a rear perspective view of the latching assembly shown in Figure 15, where the latching assembly is in an unlatched configuration, and
Figures 17a to 17c show an exploded perspective view of the latching assembly shown in Figures 9 to 16, to illustrate the steps in the method of assembling the latching assembly.

### Detailed Description

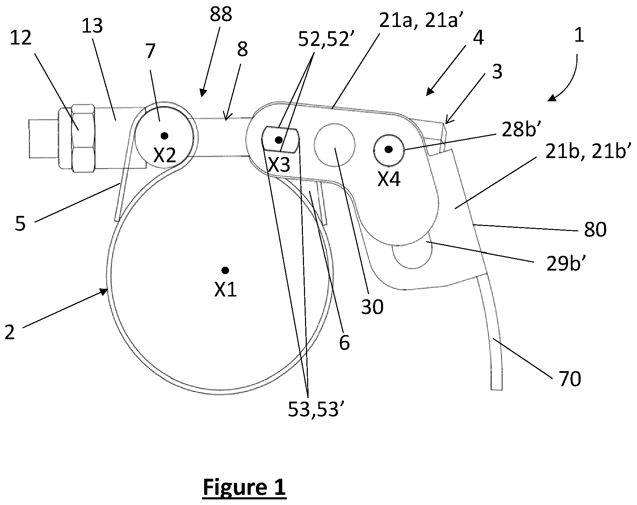

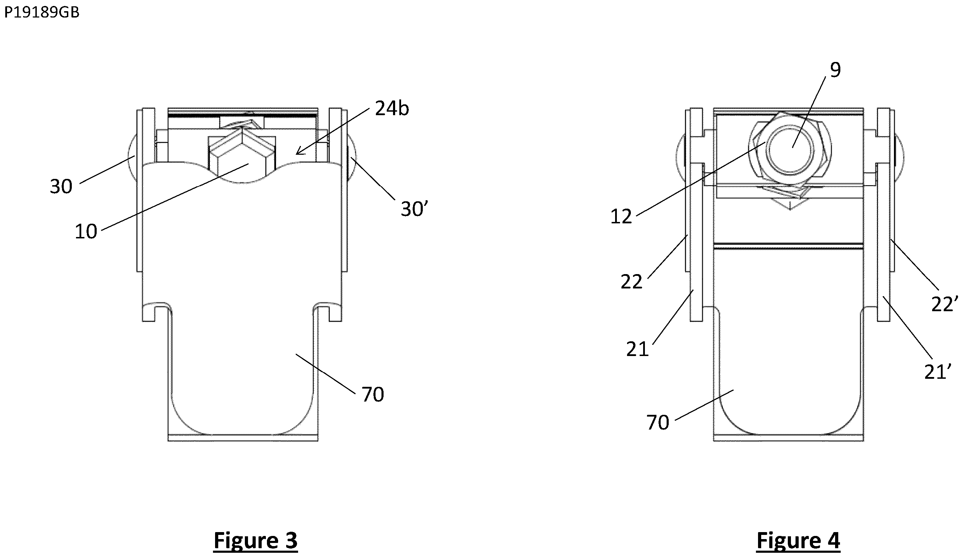

Referring to Figures 1 to 6 there is shown a quick release band clamp 1 according to a first embodiment of the invention.

The quick release band clamp 1 comprises a band 2 and a latching assembly 4.

The band 2 has a generally cylindrical shape and extends around a central longitudinal axis X1. First and second ends of the band 2 are looped back on themselves, in an outward direction relative to the inside of the band, and attached to respective portions of the outer surface of the band 2, by spot welding (although it will be appreciated that any suitable means of attachment may be used), to form first and second loops 5, 6 respectively. The loops 5, 6 are used to mount parts of the latch to the band 2 (described below). This may allow the band 2 to be relatively strong and robust, as it avoids having to insert a mechanical fastener into the band 2 to do this, which could reduce the strength and integrity of the band. In the currently described embodiment the band 2 is made of a metal, e.g. steel. However, it will be appreciated that anu suitable material may be used.

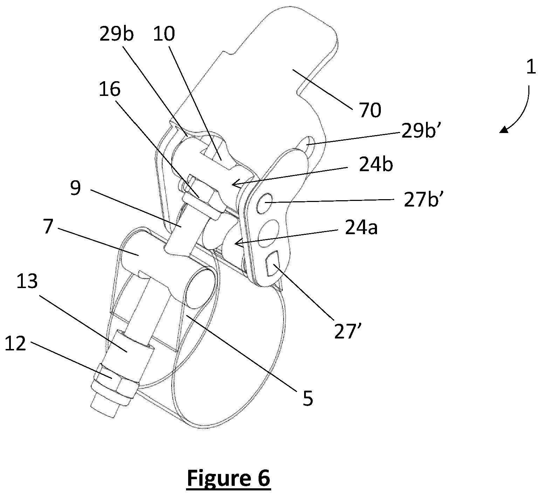

The latching assembly 4 comprises a lever 3. The lever 3 is pivotally mounted to the band 2, by a front pivot 24a, such that the lever 3 is pivotable between an unlatched position (shown in Figure 6) and a latched position (shown in Figure 1) about a first pivot axis X3 (see Figure 1).

A latching part 88 is pivotally mounted to the lever 3 by a rear pivot 24b, about a second pivot axis X4, such that the latching assembly 4 is operable between an unlatched configuration (shown in Figure 6) and a latched configuration (shown in Figure 1), by pivoting the lever 3 between its unlatched and latched positions respectively (described in more detail below). The first and second pivot axes X3, X4 are each substantially parallel to the longitudinal axis X1 of the band 2.

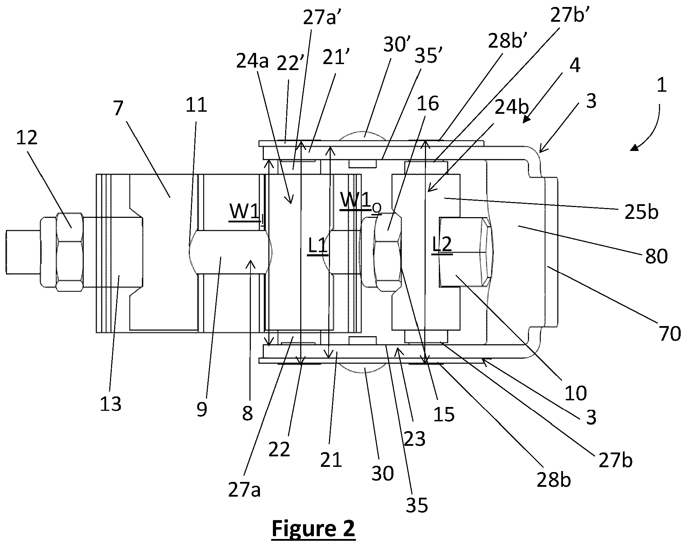

In more detail, the lever 3 comprises a frame 23 (see Figure 2) that comprises first and second opposed spaced apart side members 21, 21'. Each side member 21, 21' is a plate that extends generally in a plane, with the planes of the side members 21, 21' being substantially parallel to each other. The side members 21, 21' have opposed inner sides 35, 35' that are spaced apart by a distance W1_{I} (see Figure 2).

Each side member 21, 21' comprises a front part 21a, 21a' (see Figure 1) that is elongate and extends along a longitudinal axis and a rear part 21b, 21b' (see Figure 1) that is elongate and extends along a longitudinal axis that is inclined relative to the longitudinal axis of the front part 21a, 21a'.

The rear parts of the side members 21, 21 are connected by a connecting plate 80 that extends generally in a plane substantially perpendicular to the planes of the side members 21, 21'.

First and second retaining side plates 22, 22' are attached to the outer sides of the first and second side members 21, 21' respectively. Each retaining side plate 22, 22' is a generally thin plate that, when unflexed, extends adjacent to and generally in a plane substantially parallel to the plane of the side member 21, 21' that it is attached to. Each retaining side plate 22, 22' is attached to the outer side of the respective side member 21, 21' by a rivet 30, 30'. Each retaining side plate 22, 22' extends from the front end of the front part 21a, 21a' of the side member 21, 21' to proximal the rear end of the rear part 21b, 21b' of the side member 21, 21'. The first retaining side plate 22 and the first side member 21 form a first side portion of the lever 3 and the second retaining side plate 22' and the second side member 21' form a second side portion of the lever 3. In this respect, when the first and second mounting members 27a, 27a' of the front pivot 24a (or the first and second mounting members 27b, 27b' of the rear pivot 24b) (see below) are mounted to the first and second retaining side plates 22, 22', the first and second mounting members are mounted to the first and second side portions of the lever 3 respectively.

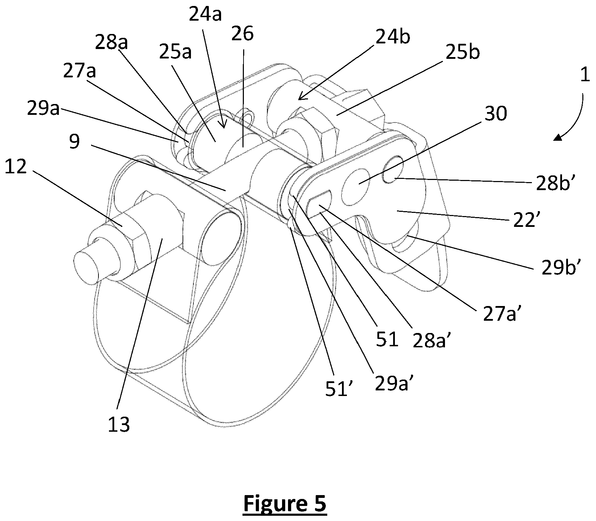

A front loading slot 29a, 29a' is provided in the front part 21a, 21a' of each side member 21, 21' (see Figure 5). Each front loading slot 29a, 29a' is elongate and extends along a longitudinal axis that is substantially mid-way between upper and lower sides of the front part 21a, 21a' of each side member 21, 21'. In this respect, the longitudinal axis of each front loading slot 29a, 29a' is co-axial with the longitudinal axis of the front part 21a, 21a' of the side member 21, 21'.

Each front loading slot 29a, 29a' has a rectangular cross-sectional shape, centred on the longitudinal axis of the slot 29a, 29a' and extends depth-wise from the inner side of the respective side member 21, 21', through the thickness of the side member 21, 21' to the outer side of the side member 21, 21'. In this respect, each front loading slot 29a, 29a' has open inner and outer sides. Each loading slot 29, 29' has flat upper and lower surfaces 51, 51' (see Figure 5).

Each front loading slot 29a, 29a' extends from an open front end, at the front end of the front part 21a, 21a' of the side member 21, 21' to a closed end within the side member 21, 21' .

A front mounting aperture 28a, 28a' is provided in each respective retaining side plate 22, 22', such that it is substantially aligned with the rear end of the front loading slot 29a, 29a'. Each front mounting aperture 28a, 28a' extends from the inner side of the plate 22, 22', through the thickness of the plate 22, 22' to the outer side of the plate 22, 22'.

The front pivot 24a has a main body 25a (see Figure 5) that is generally cylindrical and extends along a longitudinal axis. The main body 25a extends in a length direction from a first end to a second end.

The main body 25a has the general shape of a solid cylinder with a cut out channel 26, with a U-shaped cross-section, that extends from a front side to a rear side of the body 25a. The channel 26 extends from an upper side of the body 25a, such that channel 26 has an open upper side, terminating proximal a lower side of the body 25a (such that the lower side is closed).

First and second mounting members 27a, 27a' extend from the first and second ends of the main body respectively. Each mounting member 27a, 27a' has upper and lower sides 52, 52' (see Figure 1) that are substantially planar and a pair of sides 53, 53' that are convexly curved and join respective corresponding ends of the upper and lower sides. The cross-section shape of each mounting member 27a, 27a' is centred on the longitudinal axis of the main body 25a.

The front pivot 24a is formed from a single piece of steel. This allows the pivot 24 to be relatively strong and easy to assemble with the latch frame 23. In the currently described embodiment the pivot 24 is made from a machine turning process. However it will be appreciated that any suitable manufacturing process may be used.

The front pivot 24a is rotatably mounted in the rear loop 6 in the band 2 to rotate about the first pivot axis X3.

The front pivot 24a is mounted to the lever 3 such that it is rotationally fixed, relative to the lever 3, about the first pivot axis X3. In this respect, each mounting member 27a, 27a' passes through a respective front loading slot 29, 29' into a said front mounting aperture 28a, 28a' in the respective retaining side plate 22, 22'. The front mounting apertures 28a, 28a' each have a complimentary shape to that of the mounting members 27a, 27a', with the mounting members 27a, 27a' being received in an interference fit within the front mounting apertures 28a, 28a', such that the mounting members 27a, 27a' are rotationally fixed in the mounting apertures 28a, 28a' and so are rotationally fixed relative to the first and second retaining side plates 22, 22' respectively, as well as relative to the first and second side members 21, 21' respectively. Accordingly, the lever 3 is pivotally mounted to the band 2, about the pivot axis X3.

A user operable handle 70 is attached to a rear side of the connecting plate 80, such that a user can operate the handle 70 to pivot the lever 3 between its latched and unlatched positions, about the pivot axis X3.

A rear loading slot 29b, 29b' is provided in the rear part 21b, 21b' of each side member 21, 21' (see Figure 5). Each rear loading slot 29b, 29b' is elongate and extends along a longitudinal axis that is substantially mid-way between upper and lower sides of the rear part 21b, 21b' of each side member 21, 21'. In this respect, the longitudinal axis of each rear loading slot 29b, 29b' is co-axial with the longitudinal axis of the rear part 21b, 21b' of the side member 21, 21'.

Each rear loading slot 29b, 29b' has a rectangular cross-sectional shape, centred on the longitudinal axis of the slot 29b, 29b' and extends depth-wise, from the inner side of the respective side member 21, 21', through the thickness of the side member 21, 21' to the outer side of the side member 21, 21'. In this respect, each rear loading slot 29b, 29b' has open inner and outer sides.

Each rear loading slot 29b, 29b' extends forwardly from a closed rear end, proximal the rear part 21b, 21b' of the side member 21, 21' to a closed front end proximal the front of the rear part 21b, 21b' of the side member 21, 21'.

A rear mounting aperture 28b, 28b' is provided in each respective retaining side plate 22, 22', such that it is substantially aligned with the front end of the rear loading slot 29b, 29b'. Each rear mounting aperture 28b, 28b' extends from the inner side of the plate 22, 22', through the thickness of the plate 22, 22' to the outer side of the plate 22, 22'.

As stated above, the latching part 88 is pivotally mounted to the lever 3 by a rear pivot 24b, about a second pivot axis X4. In this respect, the rear pivot 24b is rotatably mounted to the lever 3 such that it is rotatable, relative to the lever 3, about the pivot axis X4.

The rear pivot 24b has a main body 25b (see Figure 2) that is generally cylindrical and extends along a longitudinal axis. The main body 25b extends in a length direction from a first end to a second end.

The main body 25b has the general shape of a solid cylinder. First and second mounting members 27b, 27b' extend from the first and second ends of the main body 25b respectively. Each mounting member 27b, 27b' has a substantially circular cross-sectional shape centred on the longitudinal axis of the main body 25b.

Each mounting member 27b, 27b' passes through the front end of a respective rear loading slot 29b, 29b' into a said rear mounting aperture 28b, 28b' in the respective retaining side plate 22, 22'.

Each of the rear mounting apertures 28b, 28b' has a substantially circular cross-sectional shape that has a slightly larger diameter than that of the mounting members 27b, 27b' such that the first and second mounting members 27b, 27b' are rotatably mounted in the rear mounting apertures 28b, 28b', in the first and second retaining side plates 22, 22' respectively. Accordingly, the rear pivot 24b is rotatably mounted to the lever 3, about said pivot axis X4 (see Figure 1).

A bore 15 is provided in the body 25b, passing through the centre of the body 25b, from a front to a rear side of the body 25b.

The latching part 88 comprises a bolt 8, a latched diameter adjustment nut 12 and a cylindrical collar 13 mounted on a shaft 9 of the bolt 8.

In this respect, the bolt 8 has an externally threaded shaft 9 and a head 10 at one end of the shaft 9 (the thread is omitted from the Figures for illustrative purposes).

The shaft 9 of the bolt 8, towards the head end of the bolt 8, is mounted in the bore 15 in the body 25b of the rear pivot 24b, with the bolt head 10 provided on a rear side of the body 25b. The shaft 8 is fixed, in the axial direction of the shaft 8, relative to the body 25b by the head 10, on the rear side of the body 25b and by an internally threaded retaining nut 16, that is screwed onto the threaded shaft 9, on a front side of the body 25b. The bolt 8 is mounted in the bore 15 such that the rear end of the bolt 8 is rotationally fixed relative to the pivot 25b about the rotational axis X4. Accordingly the bolt 8, and therefore the latching part 88, is pivotally mounted to the lever 3, by the rear pivot 24b, to rotate, relative to the lever 3, about the second pivot axis X4.

A cylindrical retaining shaft 7, is rotatably mounted in the front loop 5 of the band 2, to rotate about a rotational axis X2 (see Figure 1). The rotational axis X2 is substantially parallel to the longitudinal axis X1 of the band 2. The retaining shaft 7 has the general shape of a solid cylinder with a bore 11 (see Figure 2), that has a generally circular cross-sectional shape, passing diametrically through the centre of the shaft, from a front side to a rear side of the retaining shaft 7. A front portion of the bore 11 has a greater diameter than a rear portion of the bore 11. The front portion is sized and shaped such that it can receive a front portion of the collar 13. However, the diameter of the rear portion of the bore 11 is smaller than the diameter of the collar 13, such that the collar 13 cannot pass through the rear portion and instead abuts against the retaining shaft 7.

The shaft 9 of the bolt 8 is slidably mounted in the bore 11 such that it can slide forward, with the collar 13 moving away from the front side of the retaining shaft 7, and can rotate with the retaining shaft 7 (about said rotational axis X2).

The latched diameter adjustment nut 12 has an internal screw thread and is screw mounted on the external thread of the bolt shaft 9, forward of the retaining shaft 7. The cylindrical collar 13 is mounted on the shaft 9, between the latched diameter adjustment nut 12 and the retaining shaft 7.

The latched diameter adjustment nut 12 and cylindrical collar 13 form a first engagement member and the retaining shaft 7 with the front looped section 5 of the band 2 forms a second engagement member, arranged such that the latching assembly 4 and the retaining shaft 7 form an over-centre latch.

In this respect, the second pivot axis X4 is located on an opposite side of the first pivot axis X3, to the adjustment nut 12, cylindrical collar 13 and retaining shaft 7, when the latching assembly 4 is in its latched configuration.

When the latching assembly 4 is moved from its unlatched configuration to its latched configuration, by pivoting the lever 3 from its unlatched position to its latched position, the diameter adjustment nut 12 urges the collar 13 against the retaining shaft 7, which urges the front loop 5 of the band 2 towards the rear loop 6 of the band 2, thereby reducing the diameter of the band 2 to a 'latched diameter'. This produces a clamping force on the band 2, so as to clamp an object within the band 2. When the latching assembly 4 is moved from its latched configuration to its unlatched configuration, by pivoting the lever 3 from its latched position to its unlatched position, this increases the diameter of the band 2 back to its 'unlatched diameter'. Accordingly the band 2 no longer applies the clamping force and said objected is unclamped.

As the latching assembly 4 is moved from its unlatched configuration to its latched configuration, the shaft 9 of the bolt 8 is received in the channel 26 in the front pivot 24a. In this respect, the body 25a of the front pivot 24a acts as a stop to prevent the bolt 8 (i.e. the latching part) going past its over-centre position, which is the position past which the latching part is urged to keep moving in the unlatching direction. This prevents the latching part from moving past the over-centre position, to a position in which it starts to loosen the clamping force of the band 2**.**

In order to decrease the latched diameter of the band 2 (and thereby increase the clamping force of the band 2), the latched diameter adjustment nut 12 is screwed along the threaded shaft 9, in the direction towards the front pivot 24a. This urges the retaining shaft 7 and front pivot 24a towards each other, which urges the front and rear loops 5, 6 of the band 2 towards each other. This urges the ends of the band 2 towards each other, thereby reducing the latched diameter of the band 2. Conversely, the latched diameter is increased by screwing the nut 12 in the opposite direction.

Each front loading slot 29a, 29a' is configured such that a respective mounting member 27a, 27a' of the front pivot 24a can be inserted into the slot 29a, 29a', through the open front end of the slot 29a, 29a', and moved along the slot 29a, 29a' to a mounting position at the rear end of the loading slot 29a, 29a', in which it is received in the respective front mounting aperture 28a, 28a' of a retaining side plate 22, 22' (described in more detail below).

In this respect, the front pivot 24a extends length-wise from an outer end of the first mounting member 27a to an outer end of the second mounting member 27a'. The front pivot 24 has a length (L1) (see Figure 2).

The length (L1) of the front pivot 24a is greater than the distance (W1_{I}) between the opposed inner sides 35, 35' of the side members 21, 21'.

However, the front loading slots 29a, 29a' allow the front pivot 24a to be received, at a loading position, through the front open ends of the front loading slots 29a, 29a', with the longitudinal axis of the pivot 24a being substantially perpendicular to the planes of the side members 21, 21'.

The length (L1) of the front pivot 24a is also slightly greater than the distance W1ₒ between the outer sides of the of the side members 21, 21'. Accordingly, as a first part of each mounting member 27a, 27a' is received in a respective front loading slot 29a, 29a', through the open front end of the loading slot, a second part of the mounting member 27a, 27a' protrudes outwardly from the outer side of the side member 21, 21'.

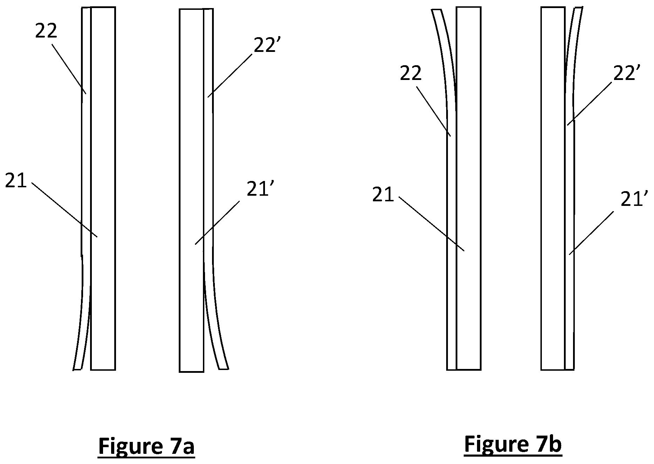

As the first part of each mounting member 27a, 27a' is moved along the respective slot 29a, 29a' to the rear end of the slot 29a, 29a', the second part of the mounting member 27a, 27a' abuts against an inner side of the respective retaining side plate 22, 22', causing the retaining side plate 22, 22' to flex outwardly, away from the outer side of the side member 22, 22', such that the first part of the mounting member 27a, 27a'is able to so move along the loading slot (as shown in Figure 7a).

When the mounting member 27a, 27a' is located in said mounting position, at the rear end of the loading slot 29a, 29a', the retaining side plate 22, 22' unflexes such that the second part of the mounting member 27a, 27a' is received in the front mounting aperture 28a, 28a' in the retaining side plate 22, 22'. This substantially retains each mounting member 27a, 27a', in the length-wise direction of the respective slot, in the mounting position (i.e. at the rear end of the front loading slot).

In this respect, the retaining side plates 22, 22' are configured to flex outwardly, to accommodate the mounting members 27a, 27a', as the first parts of the mounting members 27a, 27a' are moved along the front loading slots 29a, 29a'. In this respect, each retaining side plate 22, 22' is attached to the outer side of the side member 21, 21' at a single discrete location by a rivet 30, 30'. The remaining area of the inner surface of each side plate 22, 22' is not attached to the side member 21, 21'. In addition, the side plates 22, 22' are made of a resiliently deformable material, which of greater flexibility that than the side members 21, 21'. In the currently described embodiment, the retaining side plates 22, 22' are made of stainless steel and the side members 21, 21' are made of a mild steel. However, it will be appreciated that any suitable material may be used. For example, the side members and retaining side plates may be made of type of steel, including mild steel, stainless steel or carbon steel.

Accordingly as the first part of each mounting member 27a, 27a' is moved along the loading slots 29a, 29a', each side plate 22, 22' flexes outwardly away from the respective body member 21, 21', to allow the first part of mounting member 27a, 27a' to travel along the slot 29a, 29a' to the mounting aperture 28, 28'.

As each side plate 22, 22' is resiliently deformable, when each mounting member 27a, 27a' reaches the mounting aperture 28, 28', the plate 22, 22' flexes back to its at rest position, causing the mounting aperture 28, 28' to lower over the mounting member 27a, 27a'. This results in the mounting member 27a, 27a' clicking into the mounting aperture 28, 28'.

Since the side members 21, 21' do not have to be able to deform, to accommodate the pivot 24, this allows them to be made of a relatively rigid material, which allows the overall latching assembly 4 to be relatively rigid and strong.

Furthermore, the front pivot 24a may be mounted to the lever 3 by simply loading it into the loading slots 29a, 29a' and clicking it into position, thereby providing for ease of assembly.

The height of each front loading slot 29a, 29a' is slightly greater than the corresponding dimension of the first part of each mounting member received in the slot 29a, 29a'. Furthermore, due to the flat upper and lower surfaces 51, 51' of the slots 29a, 29a' and the flat surfaces 52, 52' of the mounting members 27a, 27a', the mounting members 27a, 27a' are only insertable into the slots 29a, 29a' in a loading orientation (when the front pivot 24 is the correct way up)and are moved along the slots 29a, 29a', to the mounting apertures 28, 28' in said loading orientation. Each front mounting aperture 28a, 28a' also has corresponding flat upper and lower sides. The loading orientation is such that, when the latching assembly 4 is in the latched configuration (shown in Figure 1), the front pivot 24a is oriented such that the channel 26, through the body 25a of the front pivot 24a, accommodates the passage of the shaft 8 of the bolt 9 through the front pivot 24a. This facilitates the mounting of the front pivot 24a to the lever 3 in the correct orientation.

In a similar arrangement to the front pivot 24a, the rear pivot 24b extends length-wise from an outer end of the first mounting member 27b to an outer end of the second mounting member 27b'. The rear pivot 24b has a length (L2) (see Figure 2).

The length (L2) of the rear pivot 24b is also greater than the distance (W1_{I}) between the opposed inner sides 35, 35' of the side members 21, 21'.

However, the length of the rear loading slots 29a, 29a' and the distance (W1_{I}) between the opposed inner sides 35, 35' of the side members 21, 21', relative to the length (L2) of the rear pivot 24b is such that a mounting member 27b, 27b' of the rear pivot 24b can be inserted into a slot 29a, 29a', through the inner side of the slot 29a, 29a', at a mounting position at the front end of the slot 29a, 29a'. The rear pivot 24b can then be pivoted about that mounting member 27b, 27b' such that the other mounting member is received in the slot 29a, 29a' and passes along the loading slot 29a, 29a' to a mounting position at the front end of the slot 29a, 29a'. As with the front pivot 24a, the length (L2) of the rear pivot 24b is also slightly greater than the distance W1ₒ between the outer sides of the of the side members 21, 21'. Accordingly, as the other mounting member 27b, 27b' is received in and moves along the slot, a first part of the mounting member 27b, 27b'is received in the slot, with a second part of the mounting member 27b, 27b' protruding outwardly from the outer side of the side member 21, 21'.

As the first part of the mounting member 27b, 27b' moves along the slot 29b, 29b' to the front end of the slot 29b, 29b', the second part of the mounting member 27b, 27b' abuts against an inner side of the respective retaining side plate 22, 22', causing the retaining side plate 22, 22' to flex outwardly, away from the outer side of the side member 22, 22', such that the first part of the mounting member 27b, 27b'is able to so move along the loading slot as shown in Figure 7b).

Furthermore, when the mounting member is located in said mounting position, at the front end of the loading slot 29b, 29b', the retaining side plate 22, 22' unflexes such that the second part of the mounting member 27b, 27b'is received in the rear mounting aperture 28b, 28b' in the retaining side plate 22, 22'. This substantially retains each mounting member 27a, 27a', in the length-wise direction of the respective slot, in the mounting position (i.e. at the front end of the rear loading slot) .

As with the front loading slots 29a, 29a', the rear loading slots 29b, 29b' allow the rear pivot 24b to be mounted to the lever 3 without increasing the distance between the first and second side members 21, 21'.

In order to assemble band clamp 1, the retaining side plates 22, 22' are first attached to the outer sides of the respective side members 21, 21', using said rivets 30.

The rear pivot 24b is then mounted to the lever 3, as described above, by inserting one of the mounting members 27b, 27b' through a rear loading slot 29b, 29b' into one of the rear mounting apertures 28b, 28b' in a retaining side plate 22, 22', and pivoting the rear pivot 24b about the mounting member 27b, 27b', such that the other mounting member 27b, 27b' is received in and travels along the opposite rear loading slot 29b, 29b'to its mounting position. As it does so, the rear part of the retaining side plate 22, 22' flexes outwardly, to accommodate the mounting member 27b, 27b', until it reaches its mounting position, at which point the rear part of the retaining side plate 22, 22' flexes back to its at rest position, lowering the mounting aperture 28b, 28b'over the mounting member 27b, 27b', to provide said click engagement (as described above).

The front pivot 24a is then inserted into the rear loop 6 of the band 3. The lever 3, with the mounted rear pivot 24b, is then moved towards the front pivot 24a such that the mounting members 27a, 27a' of the front pivot 24a are received in the front loading slots 29, 29', through the open front end of the slots 29a, 29a', and pass along the slots 29, 29' to the closed rear end of the slots 29a, 29a'. As they do so, the retaining side plates 22, 22' flex outwardly, to accommodate the mounting members 27a, 27a', until the mounting members 27a, 27a' reach the rear end of the loading slots 29a, 29a', at which point the retaining side plates flex 22, 22' back to their at rest position, lowering the front mounting apertures 28a, 28a' over the mounting members 27a, 27a', to provide said click engagement (as described above).

When the front pivot 24a is mounted to the lever 3, the shaft 9 of the bolt 8 is passed through the channel 26 in the front pivot 24a. The retaining shaft 7 is mounted in the front loop 5 of the band 2 and the bolt shaft 9 is passed through the bore 11 in the retaining shaft 7, with the collar 13 and adjustment nut 12 mounted on the shaft 9, in front of the retaining shaft 7.

As stated above, the arrangement of the loading slots 29a, 29a', 29b, 29b' and mounting apertures 28a, 28a', 28b, 28b' allows the side members 21, 21' of the lever 3 to be relatively rigid (compared to if they needed to be splayed open). The retaining side plates 22, 22' allow for the loading slots 29a, 29a', 29b, 29b' to be used, as they substantially retain the mounting members 27a, 27a', 27b, 79b' in the length-wise direction of the loading slot 29a, 29a', 29b, 29b', in its mounting position. This prevents unintended movement of the mounting members 27a, 27a', 27b, 79b' in the length-wise direction of the slots 29a, 29a', 29b, 29b' during use.

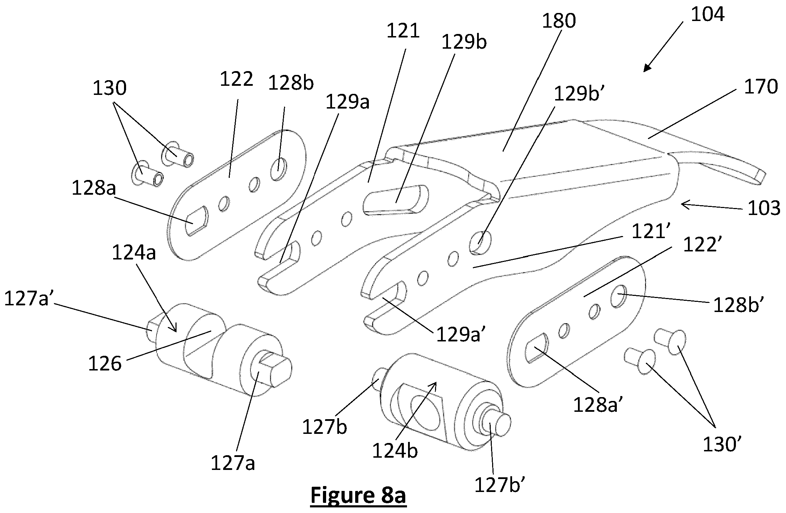

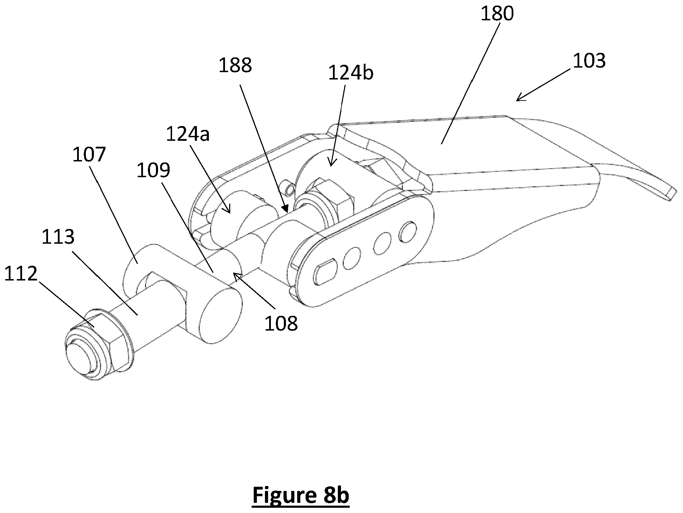

Referring to Figures 8a to 8b, there is shown an exploded/assembled view of a latching assembly 104 of a quick release band clamp according to a second embodiment of the invention, to illustrate the steps in the method of assembling the latching assembly.

The latching assembly 104 of the second embodiment is generally the same as the latching assembly of the first embodiment, except for the differences described below. Corresponding features are given corresponding reference numerals, but incremented by 100.

The latching assembly 104 of the second embodiment is generally the same as the latching assembly of the first embodiment, except in that the rear loading slot in the right side member 121' is replaced by a circular aperture 129b'.

The method of assembling the latching assembly 104 of the second embodiment is generally the same as for the first embodiment, except in that the mounting member 127b' of the rear pivot 124b is first received in the aperture 129' and through the aperture 129' into the mounting aperture 128' in the retaining side plate attached to that side member 121'.

As with the method of assembly of the latching assembly 4 of the first embodiment, the rear pivot 124b is then pivoted about the mounting member 127b', such that the other mounting member 127b is received in and travels along the opposite rear loading slot 129b to its mounting position.

Accordingly, when said mounting member 127b is received in the loading slot 129b, the longitudinal axis of the pivot 124b is inclined at an oblique angle relative to the planes of the side members 121, 121'

As with the first embodiment, as the mounting member 127b travels along the slot 129b, the rear part of the retaining side plate 122, 122' flexes outwardly, to accommodate the mounting member 127b, until it reaches its mounting position, at which point the rear part of the retaining side plate 122, 122' flexes back to its at rest position, lowering the mounting aperture 128b over the mounting member 127b to provide said click engagement (as described above).

The remainder of the latching assembly 104, and the band clamp, is assembled as for the first embodiment.

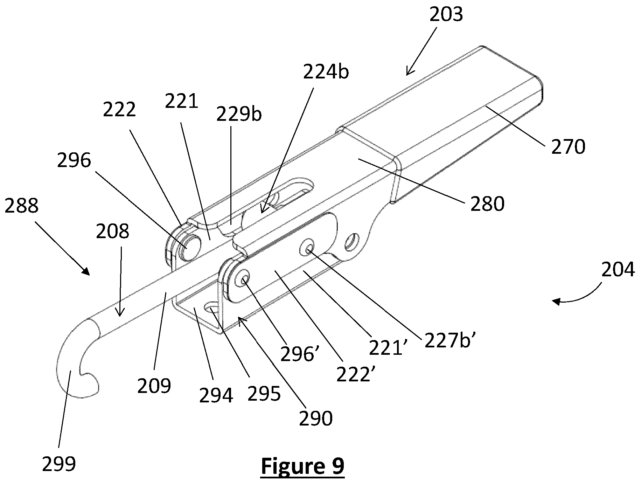

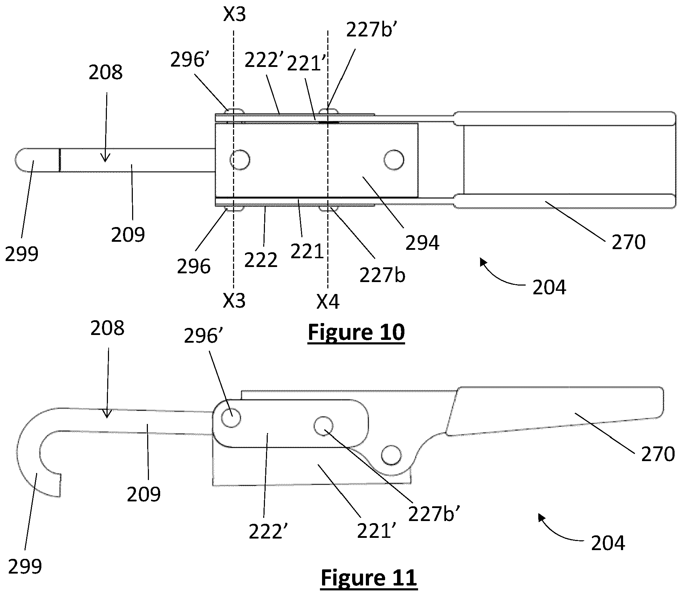

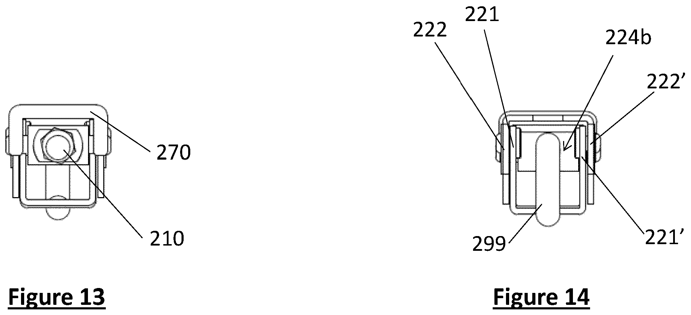

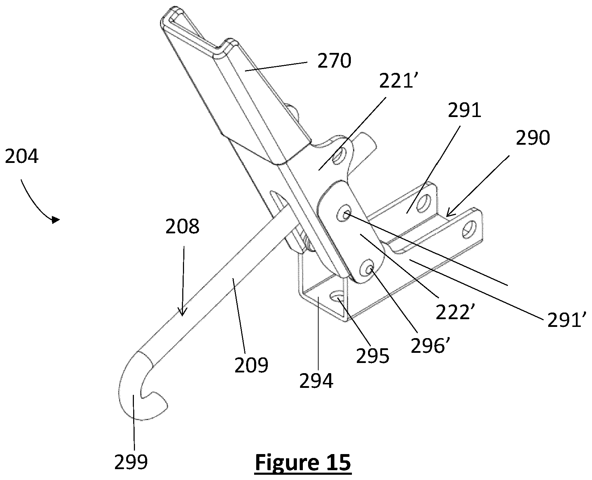

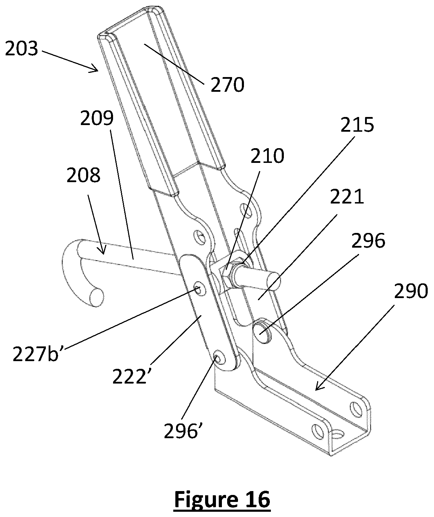

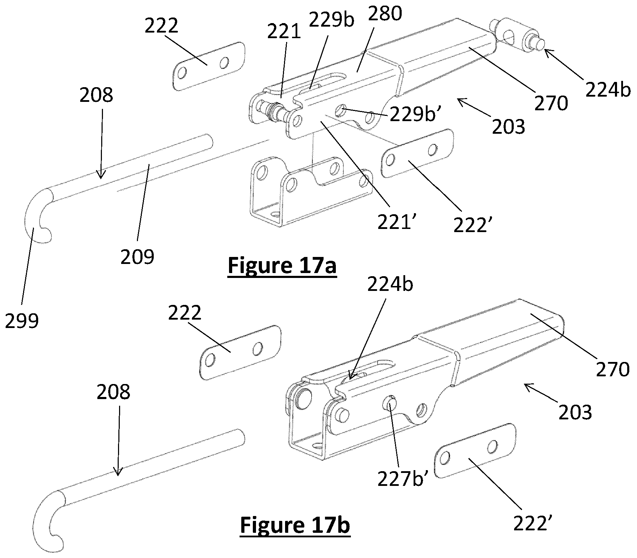

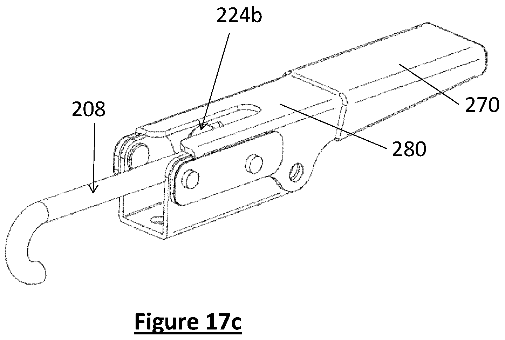

Referring to Figures 9 to 17c, there is shown a latching assembly 204, of an over-centre latch, according to a third embodiment of the invention.

The latching assembly 204 of the over-centre latch of the third embodiment is generally the same as the latching assembly 104, of the band clamp of the second embodiment, except for the differences described below. Corresponding features are given corresponding reference numerals, but incremented by 100.

The latching assembly 204 is generally the same as the latching assembly 104, of the band clamp of the second embodiment, except in that the lever 203 is instead pivotally mounted to a base 290.

In this respect, the base 290 comprises first and second side members 291, 291' the each have the generally shape of a plate and extend generally in a plane. The side members 291, 291' are opposed and spaced apart from each other and the place of the side members 291, 291' are substantially parallel to each other. A base plate 294 connects the lower sides of each side member 221, 221' to each other. The base plate 294 is provided with a plurality of apertures 295 each for receiving a respective fastener, to attach the base 294 to a first body (that is to be latched to a second body, as described below).

In this embodiment, the front pivot 124a is replaced with first and second rivets 296, 296' that pivotally mount the first and second side members 221, 221' of the lever 203 to the first and second side members 291, 291' of the base 290. The right mounting member 227b' of the rear pivot 224b is received in an aperture 229b' in the right side member 221' and the left mounting member 227b of the rear pivot 224b is received in a rear loading slot 229b in the left side member 221, as in the second embodiment.

The shaft 209 of the bolt 208 has an externally threaded portion (not shown) on which a nut 210 is screw mounted, in abutment with a rear side of the pivot 224b. The nut 210 may be screwed, in either direction on the threaded portion, to vary the distance between the hook (see below) and the pivot 224b as required, in dependence on the positioning of the catch 298 (see below).

A front end of the shaft 209 is curved to form a hook 299, which forms a first engagement member.

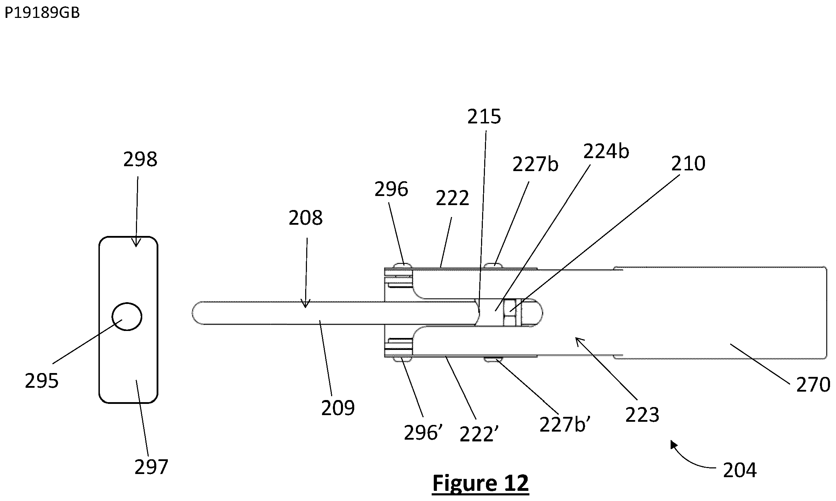

Referring to Figure 12, there is also shown a second engagement member in the form of a catch 298 comprising a catch plate 297. A circular aperture 295 is provided in the centre of the catch plate 297 and passes through the thickness of the catch plate 297. The aperture 295 is for receiving the hook 299 of the bolt 208.

In this respect, in use the latching assembly 204 is fixedly attached to a first body and the catch 200 is fixedly attached to a second body. When the latching assembly 204 is moved from its unlatched configuration to its latched configuration, the bolt 208 moves with the lever 203 and pivots about the rotational axis X4, due to its pivotal mounting to the lever 3. As the latching assembly 204 moves towards its latched configuration, the hook 299 is received in the aperture 295 in the catch plate 297. As the latching assembly 204 then continues to move to its latched configuration, the hook 299 is drawn back in the rear direction (i.e. towards the rear end of the latching assembly 204), thereby applying a latching force to the catch plate 292 and so latching the first and second bodies together.

In order to assemble the latching assembly 204, the pivot 224b is loaded to the side members 221, 221' in the same way as the rear pivot 124b of the second embodiment. However, in this embodiment, the retaining side plates 222, 222' are attached to the respective retaining side plates 221, 221' after the pivot 224b has been loaded to the side members 221, 221', i.e. after the mounting members 227b , 227b' have been received in the aperture 229b' and loading slot 229b in the second and first side members 221', 221 respectively, so as to retain the pivot 224b in its mounting position, in the length-wise direction of the slot 229b.

The ends of the mounting members 227b, 227b' and of the front pivots 296, 296' are then flattened using a mechanical process (e.g. using a hammer or other suitable tool) to attached the side retaining plates 222, 222' to the respective side members 221, 221'.

In each of the preceding embodiments, the method of assembly and arrangement of the loading slots, or loading slot and aperture, 29a, 29a', 29b, 29b', 129a, 129a', 129b, 129b', 229b, 229b' and mounting apertures 28a, 28a', 28b, 28b', 128a, 128a', 128b, 128b' in the retaining side plates 22, 22', 122, 122', 222, 222' allows the side members 21, 21', 121, 121', 221, 221' of the lever 3 to be relatively rigid (compared to if they needed to be splayed open). The retaining side plates allow for the loading slots to be used, as they substantially retain the mounting members of the respective pivot in the length-wise direction of the loading slot, in their respective mounting positions. This prevents unintended movement of the mounting members in the length-wise direction of the slots 29a, 29a', 29b, 29b' during use.

It will be appreciated that numerous modifications to the above described design may be made without departing from the scope of the invention as defined in the appended claims.

For example, in each of the above described embodiments, first and second retaining side plates are attached to the first and second side members respectively. Alternatively, only one retaining side plate may be used. Where no retaining side plate is attached to an outer side of a side member, the respective side portion of the lever (i.e. that the respective mounting member of the pivot is mounted to) may be the respective side member of the lever.

The retaining side plate(s) may be attached to the respective side member(s) in any way that permits the retaining side plate(s) to flex outwardly, as the respective mounting member is moved along the loading slot.

In the above described embodiments, retaining side plates are used to substantially retain the mounting members of the respective pivot in the length-wise direction of the respective slot, in the mounting position. Alternatively, or additionally, any other suitable type of retainer may be used to do this. For example the, or each, loading slot may be provided with an integral formation that the part of the mounting member receiving in the slot 'locks into' when it reaches its mounting position in the slot, such that the mounting member is substantially retained in the length-wise direction of the respective slot. In this case, the respective side portion of the lever (i.e. that the respective mounting member of the pivot is mounted to) may be the respective side member of the lever.

In an alternative design of the latch of the quick release band clamp, the latch may not have a clamping diameter adjustment mechanism. In this respect, the latch may only have one pivot and only one set of loading slots and mounting apertures, to load the pivot into the latch body.

In the above described embodiments, the latching assembly 4, 104 of the band clamp and the latch (comprising the latching assembly 204 and the catch 298) comprise an over-centre latching assembly. However, it will be appreciated than any type of latching assembly may be used. Furthermore, any suitable type of said first and second engagement members may be used.

Similarly, in the described embodiment of the latch, the latch is a hook latch. However, it will be appreciated that the latch may be any type of latch, including a barrel nut latch, toggle latch, draw latch, or bolt latch, for example. In this respect, any suitable type of said first and second engagement members may be used.

It will be appreciated that any of the above described embodiments may have said front and/or loading slot arrangement. For example, the band clamp of the first and second embodiments may only have the front or rear loading slot arrangement, or the latch of the third embodiment may have both the front and rear loading slot arrangements.

It will be appreciated that, in relation to any of the above described embodiments, the steps of the method of assembly may be carried out in any order. For example, the latching part may be pivotally mounted to the lever before, or after, the lever is pivotally mounted.

It will be appreciated by the reader that integers or features of the invention that are described as preferable, advantageous, convenient or the like are optional and do not limit the scope of the independent claims.

## Claims

1. A method of assembling a latching assembly (4; 104; 204) comprising:
• providing a lever (3; 103; 203);
• pivotally mounting the lever such that the lever is pivotable between an unlatched position and a latched position;
• pivotally mounting a latching part (88; 188; 288) to the lever such that the latching assembly is operable between an unlatched configuration and a latched configuration, by pivoting the lever between its unlatched and latched positions respectively;
• wherein the lever comprises first and second side members (21, 21'; 121, 121'; 221, 221'), the first and second side members being spaced apart and having opposed inner sides, wherein, in respect of each side member, a receiving space (29a, 29a', 29b, 29b'; 129a, 129a', 129b, 129b'; 229b, 229b')is provided in the side member, extending depth-wise from an inner side, at the inner side of the side member, at least part way towards an outer side of the side member and wherein at least one of the receiving spaces is a loading slot that extends length-wise from a first end to a second end;
• wherein the lever or latching part is so pivotally mounted by a method comprising:
∘ providing a pivot (24a, 24b; 124a, 124b; 224b), the pivot having first and second mounting members (27a, 27a', 27b, 27b'; 127a, 127a', 127b, 127b'; 227b, 227b');
∘ receiving at least part of the first mounting member in the receiving space in the first side member;
∘ receiving at least part of the second mounting member in the receiving space in the second side member;
∘ wherein, in respect of each mounting member, the at least part of the mounting member is received in the receiving space through the inner side of the receiving space and/or, where the receiving space is a said loading slot and if at least one of the first and second ends of the loading slot is an open end, through a said open end;
∘ and, in respect of each mounting member, locating the mounting member in a mounting position;
∘ wherein, in respect of at least one loading slot, the respective mounting member is located in the mounting position by movement of the mounting member relative to the loading slot such that the at least part of the mounting member, received in the loading slot, is moved at least part way along the length of the loading slot;
∘ and wherein, in respect of at least one loading slot, the method comprises arranging a retainer (22, 22',222, 222') with the respective mounting member such that the mounting member is substantially retained, in the length-wise direction of the slot, in the mounting position; and
∘ mounting the first and second mounting members of the pivot to first and second side portions of the lever, respectively.

2. A method according to claim 1 wherein the step of arranging the respective mounting member with the retainer comprises attaching a retaining side plate (22, 22', 222, 222')to the outer side of the side member that is provided with the loading slot, the at least part of the mounting member received in the loading slot is a first part of the mounting member and a second part of the mounting member is received in an aperture in the retaining side plate such that the mounting member is substantially retained, in the length-wise direction of the loading slot, in the mounting position.

3. A method according to claim 2 wherein:
the retaining side plate is attached to the outer side of the side member before the mounting member is located in said mounting position and wherein the mounting member is located in said mounting position by movement of the mounting member relative to the loading slot such that the first part of the mounting member, received in the loading slot, is moved at least part way along the length of the slot and, as it does so, the mounting member abuts against an inner side of the retaining side plate, causing the retaining side plate to flex outwardly, away from the outer side of the side member, such that the first part of the mounting member is able to so move along the loading slot and when the mounting member is located in said mounting position, the retaining side plate unflexes such that the second part of the mounting member is so received in the aperture in the retaining side plate; or
wherein the retaining side plate is attached to the outer side of the side member after, or as, the mounting member is located in said mounting position.

4. A method according to any preceding claim wherein the latching part comprises a first engagement member (12, 13) for co-operating with a second engagement member (7, 5) such that a latching force is exerted on, and removed from, the second engagement member when the latching assembly is in the latched and unlatched configurations respectively, optionally wherein the first engagement member is configured to co-operate with the second engagement member such that the latching assembly and the second engagement member form an over-centre latch.

5. A method of assembling a latch comprising assembling a latching assembly according to the method of claim 4 and providing a said second engagement member.

6. A method of assembling a band clamp (1) comprising:
• assembling a latching assembly according to the method of any of claims 1 to 4;
• wherein the lever is pivotally mounted to a band (2) and the latching part is arranged with the band such that the diameter of the band is adjustable between an unlatched diameter and a latched diameter, that is less than the unlatched diameter, by operation of the latching assembly between its unlatched and latched configurations respectively.

7. A method according to claim 6 wherein:
• the receiving space provided in the first side member and the receiving space provide in the second side member are each provided in a first part of the respective side member;
• a receiving space (29a, 29a', 29b, 29b'; 129a, 129a', 129b, 129b'; 229b, 229b') is provided in a second part of each of the first and second side members;
• each receiving space, that is provided in the second part of a side member, extending depth-wise from an inner side, at the inner side of the side member, at least part way towards an outer side of the side member and wherein at least one receiving space, that is provided in the second part of a side member, is a loading slot that extends length-wise from a first end to a second end;
• the pivot is a first pivot;
• and wherein the other of the lever or latching part is so pivotally mounted by a method comprising:
∘providing a second pivot (24a, 24b; 124a, 124b; 224b), the second pivot having first and second mounting members (27a, 27a', 27b, 27b'; 127a, 127a', 127b, 127b'; 227b, 227b');
∘ receiving at least part of the first mounting member of the second pivot in the receiving space in the second part of the first side member;
∘ receiving at least part of the second mounting member of the second pivot in the receiving space in the second part of the second side member;
∘ wherein, in respect of each mounting member of the second pivot, the at least part of the mounting member is received in the receiving space through the inner side of the receiving space and/or, where the receiving space is a said loading slot and if at least one of the first and second ends of the loading slot is an open end, through a said open end;
∘ and, in respect of each mounting member of the second pivot, locating the mounting member in a mounting position;
∘ wherein, in respect of at least one loading slot provided in the second part of a side member, the respective mounting member is located in the mounting position by movement of the mounting member relative to the loading slot such that the at least part of the mounting member, received in the loading slot, is moved at least part way along the length of the loading slot;
∘ and wherein, in respect of at least one loading slot provided in the second part of a side member, the method comprises arranging a retainer (22, 22') with the respective mounting member such that the mounting member is substantially retained, in the length-wise direction of the slot, in the mounting position; and
∘ mounting the first and second mounting members of the second pivot to first and second side portions of the lever, respectively.

8. A method according to either of claims 6 or 7 wherein the lever is pivotally mounted to the band by providing a pivot (24a) and mounting first and second mounting members (27a, 27a') of the pivot to first and second side portions of the lever respectively, wherein the pivot comprises a body (25a), provided between the first and second mounting members, and wherein a passage (26) is provided in the body, configured such that when the latching assembly is in the latched configuration, the latching part passes through the passage.

9. A method according to claim 8 wherein at least one of:
• the lever is so pivotally mounted by said method of pivotal mounting and wherein at least one loading slot and the at least part of the mounting member, received in the loading slot, of the pivot, are configured such that when the mounting member is located in the mounting position, the pivot is oriented such that when the latching assembly is in the latched configuration, the latching part passes through the passage;
• the passage is configured such that, when the latching part is received in the passage, the pivot acts as a stop to prevent the latching part going past an over-centre position.

10. A method according to any of claims 6 to 9 wherein at least one of:
• the pivot is made from a single piece of material;
• the latching part comprises a thread (9) and wherein a diameter adjustment member (12) is arranged with the latching part such that the latched diameter of the band is adjustable by screwing the diameter adjustment member along the thread;
• part of the band clamp is mounted in a looped section of the band.

11. A latching assembly (4; 104; 204)comprising:
• a lever (3; 103; 203), pivotally mounted such that it is pivotable between an unlatched position and a latched position;
• a latching part (88; 188; 288), pivotally mounted to the lever such that the latching assembly is operable between an unlatched configuration and a latched configuration, by pivoting the lever between its unlatched and latched positions respectively;
• wherein the lever comprises first and second side members (21, 21'; 121, 121'; 221, 221'), the first and second side members being spaced apart and having opposed inner sides, wherein, in respect of each side member, a receiving space (29a, 29a', 29b, 29b'; 129a, 129a', 129b, 129b'; 229b, 229b') is provided in the side member, extending depth-wise from an inner side, at the inner side of the side member, at least part way towards an outer side of the side member and wherein at least one of the receiving spaces is a loading slot that extends length-wise from a first end to a second end;
• and wherein the latching assembly comprises a pivot (24a, 24b; 124a, 124b; 224b) having first and second mounting members (27a, 27a', 27b, 27b'; 127a, 127a', 127b, 127b'; 227b, 227b'), the lever or latching part is so pivotally mounted by the pivot, wherein the pivot is configured, with the at least one loading slot, such that the respective lever or latching part may be so pivotally mounted by a method comprising:
∘ receiving at least part of the first mounting member in the receiving space in the first side member;
∘ receiving at least part of the second mounting member in the receiving space in the second side member;
∘ wherein, in respect of each mounting member, the at least part of the mounting member is received in the receiving space through the inner side of the receiving space and/or, where the receiving space is a said loading slot and if at least one of the first and second ends of the loading slot is an open end, through a said open end;
∘ and, in respect of each mounting member, locating the mounting member in a mounting position;
∘wherein, in respect of at least one loading slot, the respective mounting member is located in the mounting position by movement of the mounting member relative to the loading slot such that the at least part of the mounting member, received in the loading slot, is moved at least part way along the length of the loading slot;
• and wherein, in respect of at least one loading slot, the latching assembly comprises a retainer (22, 22', 222, 222') arranged with the respective mounting member such that the mounting member is substantially retained, in the length-wise direction of the slot, in the mounting position; and
• the first and second mounting members of the pivot are mounted to first and second side portions of the lever, respectively.

12. A latching assembly according to claim 11 wherein the retainer comprises a retaining side plate (22, 22', 222, 222') attached to the outer side of the side member that is provided with the loading slot, the at least part of the mounting member received in the loading slot is a first part of the mounting member and a second part of the mounting member is received in an aperture in the retaining side plate such that the mounting member is substantially retained, in the length-wise direction of the loading slot, in the mounting position.

13. A latch comprising a latching assembly according to either of claims 11 or 12 wherein the latching part comprises a first engagement member (12, 13) for co-operating with a second engagement member (7, 5) such that a latching force is exerted on, and removed from, the second engagement member when the latching assembly is in the latched and unlatched configurations respectively and a said second engagement member, optionally wherein the first engagement member is configured to co-operate with the second engagement member such that the latching assembly and the second engagement member form an over-centre latch.

14. A band clamp (1) comprising:
• a latching assembly according to either of claims 11 or 12;
• wherein the lever is pivotally mounted to a band (2) and the latching part is arranged with the band such that the diameter of the band is adjustable between an unlatched diameter and a latched diameter, that is less than the unlatched diameter, by operation of the latching assembly between its unlatched and latched configurations respectively.

15. A kit of parts of a latching assembly comprising:
• a lever (3; 103; 203), for being pivotally mounted such that it is pivotable between an unlatched position and a latched position;
• a latching part (88; 188; 288), for being pivotally mounted to the lever such that the latching assembly is operable between an unlatched configuration and a latched configuration, by pivoting the lever between its unlatched and latched positions respectively;
• wherein the lever comprises first and second side members (21, 21'; 121, 121'; 221, 221'), the first and second side members being spaced apart and having opposed inner sides, wherein, in respect of each side member, a receiving space (29a, 29a', 29b, 29b'; 129a, 129a', 129b, 129b'; 229b, 229b') is provided in the side member, extending depth-wise from an inner side, at the inner side of the side member, at least part way towards an outer side of the side member and wherein at least one of the receiving spaces is a loading slot that extends length-wise from a first end to a second end;
• a pivot (24a, 24b; 124a, 124b; 224b) having first and second mounting members (27a, 27a', 27b, 27b'; 127a, 127a', 127b, 127b'; 227b, 227b')and configured, with the at least one loading slot, such that the respective lever or latching part may be so pivotally mounted by a method comprising:
∘ receiving at least part of the first mounting member in the receiving space in the first side member;
∘ receiving at least part of the second mounting member in the receiving space in the second side member;
∘ wherein, in respect of each mounting member, the at least part of the mounting member is received in the receiving space through the inner side of the receiving space and/or, where the receiving space is a said loading slot and if at least one of the first and second ends of the loading slot is an open end, through a said open end;
∘ and, in respect of each mounting member, locating the mounting member in a mounting position;
∘ wherein, in respect of at least one loading slot, the respective mounting member is located in the mounting position by movement of the mounting member relative to the loading slot such that the at least part of the mounting member, received in the loading slot, is moved at least part way along the length of the loading slot;
• and, in respect of at least one loading slot, the kit of parts further comprises a retainer (22, 22', 222, 222') for being arranged with the respective mounting member such that the mounting member is substantially retained, in the length-wise direction of the slot, in the mounting position.

## Patentansprüche

1. **Verfahren** zum Zusammenbau einer Verriegelungsanordnung (4; 104; 204), umfassend:
• Bereitstellen eines Hebels (3; 103; 203);
• schwenkbares Anbringen des Hebels, sodass der Hebel zwischen einer entriegelten Position und einer verriegelten Position geschwenkt werden kann;
• schwenkbares Anbringen eines Verriegelungsteils (88; 188; 288) an dem Hebel, sodass die Verriegelungsanordnung zwischen einer entriegelten Konfiguration und einer verriegelten Konfiguration betätigbar ist, indem der Hebel zwischen seiner entriegelten bzw. verriegelten Position geschwenkt wird;
• wobei der Hebel ein erstes und zweites Seitenelement (21, 21'; 121, 121'; 221, 221') umfasst, wobei das erste und das zweite Seitenelement voneinander beabstandet sind und gegenüberliegende Innenseiten aufweisen, wobei in Bezug auf jedes Seitenelement ein Aufnahmeraum (29a, 29a', 29b, 29b'; 129a, 129a', 129b, 129b'; 229b, 229b') im Seitenelement vorgesehen ist und sich in der Tiefe an der Innenseite des Seitenelements von einer Innenseite mindestens teilweise in Richtung einer Außenseite des Seitenelements erstreckt, und wobei mindestens einer der Aufnahmeräume ein Ladeschlitz ist, der sich in der Länge von einem ersten Ende zu einem zweiten Ende erstreckt;
• wobei der Hebel oder das Verriegelungsteil durch ein Verfahren schwenkbar angebracht wird, umfassend:
∘ Bereitstellen eines Drehzapfens (24a, 24b; 124a, 124b; 224b), wobei der Drehzapfen erste und zweite Anbringungselemente (27a, 27a', 27b, 27b'; 127a, 127a', 127b, 127b'; 227b, 227b') aufweist;
∘ Aufnehmen mindestens eines Teils des ersten Anbringungselements im Aufnahmeraum im ersten Seitenelement;
∘ Aufnehmen mindestens eines Teils des zweiten Anbringungselements im Aufnahmeraum im zweiten Seitenelement;
∘ wobei in Bezug auf jedes Anbringungselement mindestens ein Teil des Anbringungselements durch die Innenseite des Aufnahmeraums und/oder, wenn der Aufnahmeraum der Ladeschlitz ist und wenn mindestens eines des ersten und zweiten Endes des Ladeschlitzes ein offenes Ende ist, durch das offene Ende in dem Aufnahmeraum aufgenommen wird;
∘ und, in Bezug auf jedes Anbringungselement, Anordnen des Anbringungselements in einer Anbringungsposition;
∘ wobei in Bezug auf mindestens einen Ladeschlitz das jeweilige Anbringungselement durch Bewegung des Anbringungselements relativ zum Ladeschlitz in der Anbringungsposition positioniert wird, sodass mindestens der Teil des Anbringungselements, der im Ladeschlitz aufgenommen ist, mindestens teilweise entlang der Länge des Ladeschlitzes bewegt wird;
∘ und wobei das Verfahren in Bezug auf mindestens einen Ladeschlitz das Anordnen eines Halters (22, 22', 222, 222') mit dem jeweiligen Anbringungselement umfasst, sodass das Anbringungselement in Längsrichtung des Schlitzes im Wesentlichen in der Anbringungsposition gehalten wird; und
∘ Anbringen des ersten und zweiten Anbringungselements des Drehzapfens am ersten bzw. zweiten Seitenabschnitt des Hebels.

2. Verfahren nach Anspruch 1, wobei der Schritt des Anordnens des jeweiligen Anbringungselements mit dem Halter das Anbringen einer Halteseitenplatte (22, 22', 222, 222') an der Außenseite des Seitenelements umfasst, das mit dem Ladeschlitz versehen ist, wobei mindestens der Teil des Anbringungselements, der im Ladeschlitz aufgenommen wird, ein erster Teil des Anbringungselements ist und ein zweiter Teil des Anbringungselements in einer Öffnung in der Halteseitenplatte aufgenommen wird, sodass das Anbringungselement in Längsrichtung des Ladeschlitzes im Wesentlichen in der Anbringungsposition gehalten wird.

3. Verfahren nach Anspruch 2, wobei:
die Halteseitenplatte an der Außenseite des Seitenelements befestigt ist, bevor das Anbringungselement in der Anbringungsposition positioniert wird, und wobei das Anbringungselement durch Bewegung des Anbringungselements relativ zum Ladeschlitz in der Anbringungsposition positioniert wird, sodass der erste Teil des Anbringungselements, der im Ladeschlitz aufgenommen ist, mindestens teilweise entlang der Länge des Schlitzes bewegt wird und dabei an einer Innenseite der Halteseitenplatte anstößt, wodurch sich die Halteseitenplatte nach außen, weg von der Außenseite des Seitenelements, biegt, sodass der erste Teil des Anbringungselements sich entlang des Ladeschlitzes bewegen kann, und wenn sich das Anbringungselement in der Anbringungsposition befindet, sich die Halteseitenplatte entspannt, sodass der zweite Teil des Anbringungselements in der Öffnung in der Halteseitenplatte aufgenommen wird; oder
wobei die Halteseitenplatte an der Außenseite des Seitenelements befestigt ist, nachdem oder während sich das Anbringungselement in der Anbringungsposition befindet.

4. Verfahren nach einem der vorstehenden Ansprüche, wobei das Verriegelungsteil ein erstes Eingriffselement (12, 13) zum Zusammenwirken mit einem zweiten Eingriffselement (7, 5) umfasst, sodass eine Verriegelungskraft auf das zweite Eingriffselement ausgeübt bzw. von diesem entfernt wird, wenn sich die Verriegelungsanordnung in der verriegelten bzw. entriegelten Konfiguration befindet, gegebenenfalls wobei das erste Eingriffselement zum Zusammenwirken mit dem zweiten Eingriffselement so konfiguriert ist, dass die Verriegelungsanordnung und das zweite Eingriffselement einen Übertotpunktverschluss bilden.

5. Verfahren zum Zusammenbauen einer Verriegelung, umfassend das Zusammenbauen einer Verriegelungsanordnung nach dem Verfahren von Anspruch 4 und das Bereitstellen eines zweiten Eingriffselements.

6. Verfahren zum Zusammenbauen einer Bandschelle (1), umfassend:
• Zusammenbauen einer Verriegelungsanordnung nach dem Verfahren nach einem der Ansprüche 1 bis 4;
• wobei der Hebel schwenkbar an einem Band (2) angebracht ist und das Verriegelungsteil mit dem Band so angeordnet ist, dass der Durchmesser des Bandes durch Betätigung der Verriegelungsanordnung zwischen ihrer entriegelten bzw. verriegelten Konfiguration zwischen einem entriegelten Durchmesser und einem verriegelten Durchmesser, der kleiner ist als der entriegelte Durchmesser, einstellbar ist.

7. Verfahren nach Anspruch 6, wobei:
• der im ersten Seitenelement vorgesehene Aufnahmeraum und der im zweiten Seitenelement vorgesehene Aufnahmeraum jeweils in einem ersten Teil des jeweiligen Seitenelements vorgesehen sind;
• ein Aufnahmeraum (29a, 29a', 29b, 29b'; 129a, 129a', 129b, 129b'; 229b, 229b') in einem zweiten Teil jedes des ersten und zweiten Seitenelements vorgesehen ist;
• jeder Aufnahmeraum, der in dem zweiten Teil eines Seitenelements vorgesehen ist, sich in der Tiefe an der Innenseite des Seitenelements von einer Innenseite mindestens teilweise in Richtung einer Außenseite des Seitenelements erstreckt, und wobei mindestens einer der Aufnahmeräume, der in dem zweiten Teil eines Seitenelements vorgesehen ist, ein Ladeschlitz ist, der sich in der Länge von einem ersten Ende zu einem zweiten Ende erstreckt;
• der Drehzapfen ein erster Drehzapfen ist;
• und wobei das andere Teil des Hebels oder Verriegelungsteils durch ein Verfahren schwenkbar angebracht wird, umfassend:
∘ Bereitstellen eines zweiten Drehzapfens (24a, 24b; 124a, 124b; 224b), wobei der zweite Drehzapfen erste und zweite Anbringungselemente (27a, 27a', 27b, 27b'; 127a, 127a', 127b, 127b'; 227b, 227b') aufweist;
∘ Aufnehmen mindestens eines Teils des ersten Anbringungselements des zweiten Drehzapfens im Aufnahmeraum im zweiten Teil des ersten Seitenelements;
∘ Aufnehmen mindestens eines Teils des zweiten Anbringungselements des zweiten Drehzapfens im Aufnahmeraum im zweiten Teil des zweiten Seitenelements;
∘ wobei in Bezug auf jedes Anbringungselement des zweiten Drehzapfens mindestens ein Teil des Anbringungselements durch die Innenseite des Aufnahmeraums und/oder, wenn der Aufnahmeraum der Ladeschlitz ist und wenn mindestens eines des ersten und zweiten Endes des Ladeschlitzes ein offenes Ende ist, durch das offene Ende in dem Aufnahmeraum aufgenommen wird;
∘ und, in Bezug auf jedes Anbringungselement des zweiten Drehzapfens, Anordnen des Anbringungselements in einer Anbringungsposition;
∘ wobei in Bezug auf mindestens einen Ladeschlitz, der in dem zweiten Teil eines Seitenteils vorgesehen ist, das jeweilige Anbringungselement durch Bewegung des Anbringungselements relativ zum Ladeschlitz in der Anbringungsposition positioniert wird, sodass mindestens der Teil des Anbringungselements, der im Ladeschlitz aufgenommen ist, mindestens teilweise entlang der Länge des Ladeschlitzes bewegt wird;
∘ und wobei das Verfahren in Bezug auf mindestens einen Ladeschlitz, der in dem zweiten Teil eines Seitenelements vorgesehen ist, das Anordnen eines Halters (22, 22') mit dem jeweiligen Anbringungselement umfasst, sodass das Anbringungselement in Längsrichtung des Schlitzes im Wesentlichen in der Anbringungsposition gehalten wird; und
∘ Anbringen des ersten und zweiten Anbringungselements des zweiten Drehzapfens am ersten bzw. zweiten Seitenabschnitt des Hebels.

8. Verfahren nach Anspruch 6 oder 7, wobei der Hebel schwenkbar an dem Band angebracht wird, indem ein Drehzapfen (24a) bereitgestellt wird und ein erstes und zweites Anbringungselemente (27a, 27a') des Drehzapfens an einem ersten bzw. zweiten Seitenabschnitt des Hebels angebracht werden, wobei der Drehzapfen einen Körper (25a) umfasst, der zwischen dem ersten und zweiten Anbringungselement bereitgestellt wird, und wobei ein Durchgang (26) in dem Körper bereitgestellt wird, der so konfiguriert ist, dass, wenn sich die Verriegelungsanordnung in der verriegelten Konfiguration befindet, das Verriegelungsteil durch den Durchgang verläuft.

9. Verfahren nach Anspruch 8, wobei mindestens eines der Folgenden gilt:
• der Hebel ist durch das Verfahren des schwenkbaren Anbringens so schwenkbar angebracht, und wobei mindestens ein Ladeschlitz und der mindestens eine Teil des Anbringungselements des Drehzapfens, der in dem Ladeschlitz aufgenommen ist, so konfiguriert sind, dass, wenn sich das Anbringungselement in der Anbringungsposition befindet, der Drehzapfen so ausgerichtet ist, dass, wenn sich die Verriegelungsanordnung in der verriegelten Konfiguration befindet, das Verriegelungsteil durch den Durchgang verläuft;
• der Durchgang ist so konfiguriert, dass der Drehzapfen als Anschlag fungiert, wenn das Verriegelungsteil im Durchgang aufgenommen ist, um zu verhindern, dass das Verriegelungsteil über eine Übertotpunktposition hinausgeht.

10. Verfahren nach einem der Ansprüche 6 bis 9, wobei mindestens eines der Folgenden gilt:
• der Drehzapfen ist aus einem einzigen Stück Material gefertigt;
• das Verriegelungsteil umfasst ein Gewinde (9) und wobei ein Durchmessereinstellelement (12) mit dem Verriegelungsteil so angeordnet ist, dass der verriegelte Durchmesser des Bandes durch Schrauben des Durchmessereinstellelements entlang des Gewindes einstellbar ist;
• ein Teil der Bandschelle ist in einem Schlaufenabschnitt des Bandes angebracht.

11. Verriegelungsanordnung (4; 104; 204), umfassend:
• einen Hebel (3; 103; 203), der schwenkbar angebracht ist, sodass er zwischen einer entriegelten Position und einer verriegelten Position geschwenkt werden kann;
• ein schwenkbares Teil (88; 188; 288), das schwenkbar an dem Hebel angebracht ist, sodass die Verriegelungsanordnung zwischen einer entriegelten Konfiguration und einer verriegelten Konfiguration betätigbar ist, indem der Hebel zwischen seiner entriegelten bzw. verriegelten Position geschwenkt wird;
• wobei der Hebel ein erstes und zweites Seitenelement (21, 21'; 121, 121'; 221, 221') umfasst, wobei das erste und das zweite Seitenelement voneinander beabstandet sind und gegenüberliegende Innenseiten aufweisen, wobei in Bezug auf jedes Seitenelement ein Aufnahmeraum (29a, 29a', 29b, 29b'; 129a, 129a', 129b, 129b'; 229b, 229b') im Seitenelement vorgesehen ist und sich in der Tiefe an der Innenseite des Seitenelements von einer Innenseite mindestens teilweise in Richtung einer Außenseite des Seitenelements erstreckt, und wobei mindestens einer der Aufnahmeräume ein Ladeschlitz ist, der sich in der Länge von einem ersten Ende zu einem zweiten Ende erstreckt;
• und wobei die Verriegelungsanordnung einen Drehzapfen (24a, 24b; 124a, 124b; 224b) umfasst, der ein erstes und zweites Anbringungselement (27a, 27a', 27b, 27b'; 127a, 127a', 127b, 127b'; 227b, 227b') aufweist, wobei der Hebel oder das Verriegelungsteil durch den Drehzapfen so schwenkbar angebracht ist, wobei der Drehzapfen mit dem mindestens einen Ladeschlitz so konfiguriert ist, dass der jeweilige Hebel oder das Verriegelungsteil durch ein Verfahren schwenkbar angebracht werden kann, umfassend:
∘ Aufnehmen mindestens eines Teils des ersten Anbringungselements im Aufnahmeraum im ersten Seitenelement;
∘ Aufnehmen mindestens eines Teils des zweiten Anbringungselements im Aufnahmeraum im zweiten Seitenelement;
∘ wobei in Bezug auf jedes Anbringungselement mindestens ein Teil des Anbringungselements durch die Innenseite des Aufnahmeraums und/oder, wenn der Aufnahmeraum der Ladeschlitz ist und wenn mindestens eines des ersten und zweiten Endes des Ladeschlitzes ein offenes Ende ist, durch das offene Ende in dem Aufnahmeraum aufgenommen wird;
∘ und, in Bezug auf jedes Anbringungselement, Anordnen des Anbringungselements in einer Anbringungsposition;
∘ wobei in Bezug auf mindestens einen Ladeschlitz das jeweilige Anbringungselement durch Bewegung des Anbringungselements relativ zum Ladeschlitz in der Anbringungsposition positioniert wird, sodass mindestens der Teil des Anbringungselements, der im Ladeschlitz aufgenommen ist, mindestens teilweise entlang der Länge des Ladeschlitzes bewegt wird;
• und wobei die Verriegelungsanordnung in Bezug auf mindestens einen Ladeschlitz einen Halter (22, 22', 222, 222'), der mit dem jeweiligen Anbringungselement angeordnet ist, umfasst, sodass das Anbringungselement in Längsrichtung des Schlitzes im Wesentlichen in der Anbringungsposition gehalten wird; und
• das erste und zweite Anbringungselement des Drehzapfens am ersten bzw. zweiten Seitenabschnitt des Hebels angebracht werden.

12. Verriegelungsanordnung nach Anspruch 11, wobei der Halter eine Halteseitenplatte (22, 22', 222, 222'), die an der Außenseite des Seitenelements befestigt ist, umfasst, das mit dem Ladeschlitz versehen ist, wobei mindestens der Teil des Anbringungselements, der im Ladeschlitz aufgenommen wird, ein erster Teil des Anbringungselements ist und ein zweiter Teil des Anbringungselements in einer Öffnung in der Halteseitenplatte aufgenommen wird, sodass das Anbringungselement in Längsrichtung des Ladeschlitzes im Wesentlichen in der Anbringungsposition gehalten wird.

13. Verriegelung, umfassend eine Verriegelungsanordnung nach einem der Ansprüche 11 oder 12, wobei das Verriegelungsteil ein erstes Eingriffselement (12, 13) zum Zusammenwirken mit einem zweiten Eingriffselement (7, 5), sodass eine Verriegelungskraft auf das zweite Eingriffselement ausgeübt bzw. von diesem entfernt wird, wenn sich die Verriegelungsanordnung in der verriegelten bzw. entriegelten Konfiguration befindet, und das zweite Eingriffselement umfasst, gegebenenfalls wobei das erste Eingriffselement zum Zusammenwirken mit dem zweiten Eingriffselement so konfiguriert ist, dass die Verriegelungsanordnung und das zweite Eingriffselement einen Übertotpunktverschluss bilden.

14. Bandschelle (1), umfassend:
• eine Verriegelungsanordnung nach einem der Ansprüche 11 oder 12;
• wobei der Hebel schwenkbar an einem Band (2) angebracht ist und das Verriegelungsteil mit dem Band so angeordnet ist, dass der Durchmesser des Bandes durch Betätigung der Verriegelungsanordnung zwischen ihrer entriegelten bzw. verriegelten Konfiguration zwischen einem entriegelten Durchmesser und einem verriegelten Durchmesser, der kleiner ist als der entriegelte Durchmesser, einstellbar ist.

15. Bausatz mit Teilen einer Verriegelungsanordnung, umfassend:
• einen Hebel (3; 103; 203) zum schwenkbaren Anbringen, sodass er zwischen einer entriegelten Position und einer verriegelten Position geschwenkt werden kann;
• ein schwenkbares Teil (88; 188; 288) zum schwenkbaren Anbringen an dem Hebel, sodass die Verriegelungsanordnung zwischen einer entriegelten Konfiguration und einer verriegelten Konfiguration betätigbar ist, indem der Hebel zwischen seiner entriegelten bzw. verriegelten Position geschwenkt wird;
• wobei der Hebel ein erstes und zweites Seitenelement (21, 21'; 121, 121'; 221, 221') umfasst, wobei das erste und das zweite Seitenelement voneinander beabstandet sind und gegenüberliegende Innenseiten aufweisen, wobei in Bezug auf jedes Seitenelement ein Aufnahmeraum (29a, 29a', 29b, 29b'; 129a, 129a', 129b, 129b'; 229b, 229b') im Seitenelement vorgesehen ist und sich in der Tiefe an der Innenseite des Seitenelements von einer Innenseite mindestens teilweise in Richtung einer Außenseite des Seitenelements erstreckt, und wobei mindestens einer der Aufnahmeräume ein Ladeschlitz ist, der sich in der Länge von einem ersten Ende zu einem zweiten Ende erstreckt;
• einen Drehzapfens (24a, 24b; 124a, 124b; 224b), der ein erstes und zweites Anbringungselement (27a, 27a', 27b, 27b'; 127a, 127a', 127b, 127b'; 227b, 227b') aufweist und mit dem mindestens einen Ladeschlitz so konfiguriert ist, dass der jeweilige Hebel oder das Verriegelungsteil durch ein Verfahren schwenkbar angebracht werden kann, umfassend:
∘ Aufnehmen mindestens eines Teils des ersten Anbringungselements im Aufnahmeraum im ersten Seitenelement;
∘ Aufnehmen mindestens eines Teils des zweiten Anbringungselements im Aufnahmeraum im zweiten Seitenelement;
∘ wobei in Bezug auf jedes Anbringungselement mindestens ein Teil des Anbringungselements durch die Innenseite des Aufnahmeraums und/oder, wenn der Aufnahmeraum der Ladeschlitz ist und wenn mindestens eines des ersten und zweiten Endes des Ladeschlitzes ein offenes Ende ist, durch das offene Ende in dem Aufnahmeraum aufgenommen wird;
∘ und, in Bezug auf jedes Anbringungselement, Anordnen des Anbringungselements in einer Anbringungsposition;
∘ wobei in Bezug auf mindestens einen Ladeschlitz das jeweilige Anbringungselement durch Bewegung des Anbringungselements relativ zum Ladeschlitz in der Anbringungsposition positioniert wird, sodass mindestens der Teil des Anbringungselements, der im Ladeschlitz aufgenommen ist, mindestens teilweise entlang der Länge des Ladeschlitzes bewegt wird;
• und wobei der Bausatz in Bezug auf mindestens einen Ladeschlitz ferner einen Halter (22, 22', 222, 222') zum Anordnen mit dem jeweiligen Anbringungselement umfasst, sodass das Anbringungselement in Längsrichtung des Schlitzes im Wesentlichen in der Anbringungsposition gehalten wird.

## Revendications

1. Procédé d'assemblage d'un ensemble de verrouillage (4 ; 104 ; 204) comprenant :
• la fourniture d'un levier (3 ; 103 ; 203) ;
• le montage pivotant du levier de sorte que le levier puisse pivoter entre une position déverrouillée et une position verrouillée ;
• le montage pivotant d'une pièce de verrouillage (88 ; 188 ; 288) sur le levier de sorte que l'ensemble de verrouillage puisse fonctionner entre une configuration déverrouillée et une configuration verrouillée, par pivotement du levier entre ses positions déverrouillée et verrouillée respectivement ;
• dans lequel le levier comprend des premier et second éléments latéraux (21, 21' ; 121, 121' ; 221, 221'), les premier et second éléments latéraux étant espacés et ayant des côtés internes opposés, dans lequel, à l'égard de chaque élément latéral, un espace de réception (29a, 29a', 29b, 29b' ; 129a, 129a', 129b, 129b' ; 229b, 229b') est prévu dans l'élément latéral, s'étendant en profondeur à partir d'un côté interne, au niveau du côté interne de l'élément latéral, au moins en partie vers un côté externe de l'élément latéral et dans lequel au moins l'un des espaces de réception est une fente de chargement qui s'étend en longueur à partir d'une première extrémité vers une seconde extrémité ;
• dans lequel le levier ou la pièce de verrouillage est ainsi monté(e) de manière pivotante par un procédé comprenant :
∘ la fourniture d'un pivot (24a, 24b ; 124a, 124b ; 224b), le pivot ayant des premier et second éléments de montage (27a, 27a', 27b, 27b' ;
127a, 127a', 127b, 127b' ; 227b, 227b') ;
∘ la réception d'au moins une partie du premier élément de montage dans l'espace de réception du premier élément latéral ;
∘ la réception d'au moins une partie du second élément de montage dans l'espace de réception du second élément latéral ;
∘ dans lequel, à l'égard de chaque élément de montage, l'au moins une partie de l'élément de montage est reçue dans l'espace de réception à travers le côté interne de l'espace de réception et/ou, lorsque l'espace de réception est ladite fente de chargement et si au moins l'une des première et seconde extrémités de la fente de chargement est une extrémité ouverte, à travers ladite extrémité ouverte ;
∘ et, à l'égard de chaque élément de montage, le positionnement de l'élément de montage dans une position de montage ;
∘ dans lequel, à l'égard d'au moins une fente de chargement, l'élément de montage respectif est situé dans la position de montage par déplacement de l'élément de montage par rapport à la fente de chargement, de sorte que l'au moins une partie de l'élément de montage, reçue dans la fente de chargement, se déplace au moins en partie le long de la longueur de la fente de chargement ;
∘ et dans lequel, à l'égard d'au moins une fente de chargement, le procédé comprend la disposition d'un dispositif de retenue (22, 22', 222, 222') avec l'élément de montage respectif de sorte que l'élément de montage soit sensiblement retenu, dans la direction de longueur de la fente, dans la position de montage ; et
∘ le montage des premier et second éléments de montage du pivot sur des première et seconde parties latérales du levier, respectivement.

2. Procédé selon la revendication 1, dans lequel l'étape consistant à disposer l'élément de montage respectif avec le dispositif de retenue comprend la fixation d'une plaque latérale de retenue (22, 22', 222, 222') au côté externe de l'élément latéral qui est pourvu de la fente de chargement, l'au moins une partie de l'élément de montage reçue dans la fente de chargement est une première partie de l'élément de montage et une seconde partie de l'élément de montage est reçue dans une ouverture de la plaque latérale de retenue, de sorte que l'élément de montage est sensiblement retenu, dans la direction de longueur de la fente de chargement, dans la position de montage.

3. Procédé selon la revendication 2, dans lequel :
la plaque latérale de retenue est fixée au côté externe de l'élément latéral avant que l'élément de montage ne soit situé dans ladite position de montage et dans lequel l'élément de montage est situé dans ladite position de montage par déplacement de l'élément de montage par rapport à la fente de chargement, de sorte que la première partie de l'élément de montage, reçue dans la fente de chargement, se déplace au moins en partie le long de la longueur de la fente et que, pendant cette phase, l'élément de montage vient en butée contre une face interne de la plaque latérale de retenue, ce qui amène la plaque latérale de retenue à se plier vers l'extérieur, à l'opposé de la face externe de l'élément latéral, de sorte que la première partie de l'élément de montage puisse ainsi se déplacer le long de la fente de chargement et, lorsque l'élément de montage est situé dans ladite position de montage, la plaque latérale de retenue se déplie de sorte que la seconde partie de l'élément de montage soit ainsi reçue dans l'ouverture dans la plaque latérale de retenue ; ou
dans lequel la plaque latérale de retenue est fixée au côté externe de l'élément latéral après, ou pendant, que l'élément de montage est situé dans ladite position de montage.

4. Procédé selon l'une quelconque revendication précédente, dans lequel la pièce de verrouillage comprend un premier élément de prise (12, 13) destiné à coopérer avec un second élément de prise (7, 5) de sorte qu'une force de verrouillage est exercée sur et supprimée à partir du second élément de prise lorsque l'ensemble de verrouillage se trouve dans les configurations verrouillée et déverrouillée respectivement, optionnellement, dans lequel le premier élément de prise est conçu pour coopérer avec le second élément de prise de sorte que l'ensemble de verrouillage et le second élément de prise forment un verrou d'arc-boutement.

5. Procédé d'assemblage d'un verrou comprenant l'assemblage d'un ensemble de verrouillage selon le procédé selon la revendication 4 et la fourniture dudit second élément de prise.

6. Procédé d'assemblage d'un étrier à bande (1) comprenant :
• l'assemblage d'un ensemble de verrouillage selon le procédé selon l'une quelconque des revendications 1 à 4 ;
• dans lequel le levier est monté de manière pivotante sur une bande (2) et la pièce de verrouillage est disposée avec la bande de manière à ce que le diamètre de la bande puisse être ajusté entre un diamètre déverrouillé et un diamètre verrouillé qui est inférieur au diamètre déverrouillé, par fonctionnement de l'ensemble de verrouillage entre ses configurations déverrouillée et verrouillée respectivement.

7. Procédé selon la revendication 6, dans lequel :
• l'espace de réception prévu dans le premier élément latéral et l'espace de réception prévu dans le second élément latéral sont chacun prévus dans une première partie de l'élément latéral respectif ;
• un espace de réception (29a, 29a', 29b, 29b' ; 129a, 129a', 129b, 129b' ; 229b, 229b') est prévu dans une seconde partie de chacun des premier et second éléments latéraux ;
• chaque espace de réception, qui est prévu dans la seconde partie d'un élément latéral, s'étendant en profondeur à partir d'un côté interne, au niveau du côté interne de l'élément latéral, au moins en partie vers un côté externe de l'élément latéral et dans lequel au moins un espace de réception, qui est prévu dans la seconde partie d'un élément latéral, est une fente de chargement qui s'étend en longueur à partir d'une première extrémité vers'une seconde extrémité ;
• le pivot est un premier pivot ;
• et dans lequel l'autre du levier ou de la pièce de verrouillage est ainsi monté de manière pivotante par un procédé comprenant :
∘ la fourniture d'un second pivot (24a, 24b ; 124a, 124b ; 224b), le second pivot ayant des premier et second éléments de montage (27a, 27a', 27b, 27b' ; 127a, 127a', 127b, 127b' ; 227b, 227b') ;
∘ la réception d'au moins une partie du premier élément de montage du second pivot dans l'espace de réception de la seconde partie du premier élément latéral ;
∘ la réception d'au moins une partie du second élément de montage du second pivot dans l'espace de réception de la seconde partie du second élément latéral ;
∘ dans lequel, à l'égard de chaque élément de montage du second pivot, l'au moins une partie de l'élément de montage est reçue dans l'espace de réception à travers le côté interne de l'espace de réception et/ou, lorsque l'espace de réception est ladite fente de chargement et si au moins l'une des première et seconde extrémités de la fente de chargement est une extrémité ouverte, à travers ladite extrémité ouverte ;
∘ et, à l'égard de chaque élément de montage du second pivot, le positionnement de l'élément de montage dans une position de montage ;
∘ dans lequel, à l'égard d'au moins une fente de chargement prévue dans la seconde partie d'un élément latéral, l'élément de montage respectif est situé dans la position de montage par déplacement de l'élément de montage par rapport à la fente de chargement, de sorte que l'au moins une partie de l'élément de montage, reçue dans la fente de chargement, se déplace au moins en partie le long de la longueur de la fente de chargement ;
∘ et dans lequel, à l'égard d'au moins une fente de chargement prévue dans la seconde partie d'un élément latéral, le procédé comprend la disposition d'un dispositif de retenue (22, 22') avec l'élément de montage respectif de sorte que l'élément de montage soit sensiblement retenu, dans la direction de longueur de la fente, dans la position de montage ; et
∘ le montage des premier et second éléments de montage du second pivot sur des première et seconde parties latérales du levier, respectivement.

8. Procédé selon l'une des revendications 6 ou 7, dans lequel le levier est monté de manière pivotante sur la bande par fourniture d'un pivot (24a) et par montage de premier et second éléments de montage (27a, 27a') du pivot sur des première et seconde parties latérales du levier respectivement, dans lequel le pivot comprend un corps (25a), prévu entre les premier et second éléments de montage, et dans lequel un passage (26) est prévu dans le corps, conçu de sorte que, lorsque l'ensemble de verrouillage se trouve dans la configuration verrouillée, la pièce de verrouillage passe à travers le passage.

9. Procédé selon la revendication 8, dans lequel au moins l'un parmi :
• le levier est ainsi monté de manière pivotante par ledit procédé de montage pivotant et dans lequel au moins une fente de chargement et l'au moins une partie de l'élément de montage, reçue dans la fente de chargement, du pivot, sont conçus de sorte que, lorsque l'élément de montage est situé dans la position de montage, le pivot est orienté de sorte que, lorsque l'ensemble de verrouillage se trouve dans la configuration verrouillée, la pièce de verrouillage passe à travers le passage ;
• le passage est conçu de sorte que, lorsque la pièce de verrouillage est reçue dans le passage, le pivot agit comme une butée afin d'empêcher la pièce de verrouillage de dépasser une position d'arc-boutement.

10. Procédé selon l'une quelconque des revendications 6 à 9, dans lequel au moins l'un parmi :
• le pivot est fait à partir d'une seule pièce de matériau ;
• la pièce de verrouillage comprend un filet (9) et dans lequel un élément d'ajustement de diamètre (12) est disposé avec la pièce de verrouillage de sorte que le diamètre verrouillé de la bande puisse être ajusté par vissage de l'élément d'ajustement de diamètre le long du filet ;
• une partie de l'étrier à bande est montée dans une section bouclée de la bande.

11. Ensemble de verrouillage (4 ; 104 ; 204) comprenant :
• un levier (3 ; 103 ; 203), monté de manière pivotante de sorte qu'il peut pivoter entre une position déverrouillée et une position verrouillée ;
• une pièce de verrouillage (88 ; 188 ; 288), montée de manière pivotante sur le levier de sorte que l'ensemble de verrouillage puisse fonctionner entre une configuration déverrouillée et une configuration verrouillée, par pivotement du levier entre ses positions déverrouillée et verrouillée respectivement ;
• dans lequel le levier comprend des premier et second éléments latéraux (21, 21' ; 121, 121' ; 221, 221'), les premier et second éléments latéraux étant espacés et ayant des côtés internes opposés, dans lequel, à l'égard de chaque élément latéral, un espace de réception (29a, 29a', 29b, 29b' ;
129a, 129a', 129b, 129b' ; 229b, 229b') est prévu dans l'élément latéral, s'étendant en profondeur à partir d'un côté interne, au niveau du côté interne de l'élément latéral, au moins en partie vers un côté externe de l'élément latéral et dans lequel au moins l'un des espaces de réception est une fente de chargement qui s'étend en longueur à partir d'une première extrémité vers une seconde extrémité ;
• et dans lequel l'ensemble de verrouillage comprend un pivot (24a, 24b ; 124a, 124b ; 224b) ayant des premier et second éléments de montage (27a, 27a', 27b, 27b' ; 127a, 127a', 127b, 127b' ; 227b, 227b'), le levier ou la pièce de verrouillage est ainsi monté(e) de manière pivotante par le pivot, dans lequel le pivot est conçu, avec l'au moins une fente de chargement, de sorte que le levier ou la pièce de verrouillage respectif puisse être ainsi monté de manière pivotante par un procédé comprenant :
∘ la réception d'au moins une partie du premier élément de montage dans l'espace de réception du premier élément latéral ;
∘ la réception d'au moins une partie du second élément de montage dans l'espace de réception du second élément latéral ;
∘ dans lequel, à l'égard de chaque élément de montage, l'au moins une partie de l'élément de montage est reçue dans l'espace de réception à travers le côté interne de l'espace de réception et/ou, lorsque l'espace de réception est ladite fente de chargement et si au moins l'une des première et seconde extrémités de la fente de chargement est une extrémité ouverte, à travers ladite extrémité ouverte ;
∘ et, à l'égard de chaque élément de montage, le positionnement de l'élément de montage dans une position de montage ;
∘ dans lequel, à l'égard d'au moins une fente de chargement, l'élément de montage respectif est situé dans la position de montage par déplacement de l'élément de montage par rapport à la fente de chargement, de sorte que l'au moins une partie de l'élément de montage, reçue dans la fente de chargement, se déplace au moins en partie le long de la longueur de la fente de chargement ;
• et dans lequel, à l'égard d'au moins une fente de chargement, l'ensemble de verrouillage comprend un dispositif de retenue (22, 22', 222, 222') disposé avec l'élément de montage respectif de sorte que l'élément de montage soit sensiblement retenu, dans la direction de longueur de la fente, dans la position de montage ; et
• les premier et second éléments de montage du pivot sont montés sur des première et seconde parties latérales du levier, respectivement.

12. Ensemble de verrouillage selon la revendication 11, dans lequel le dispositif de retenue comprend une plaque latérale de retenue (22, 22', 222, 222') fixée au côté externe de l'élément latéral qui est pourvu de la fente de chargement, l'au moins une partie de l'élément de montage reçue dans la fente de chargement est une première partie de l'élément de montage et une seconde partie de l'élément de montage est reçue dans une ouverture de la plaque latérale de retenue, de sorte que l'élément de montage est sensiblement retenu, dans la direction de longueur de la fente de chargement, dans la position de montage.

13. Verrou comprenant un ensemble de verrouillage selon l'une des revendications 11 ou 12, dans lequel la pièce de verrouillage comprend un premier élément de prise (12, 13) destiné à coopérer avec un second élément de prise (7, 5) de sorte qu'une force de verrouillage est exercée sur et supprimée à partir du second élément de prise lorsque l'ensemble de verrouillage se trouve dans les configurations verrouillée et déverrouillée respectivement et ledit second élément de prise, optionnellement, dans lequel le premier élément de prise est conçu pour coopérer avec le second élément de prise de sorte que l'ensemble de verrouillage et le second élément de prise forment un verrou d'arc-boutement.

14. Étrier à bande (1) comprenant :
• un ensemble de verrouillage selon l'une des revendications 11 ou 12 ;
• dans lequel le levier est monté de manière pivotante sur une bande (2) et la pièce de verrouillage est disposée avec la bande de manière à ce que le diamètre de la bande puisse être ajusté entre un diamètre déverrouillé et un diamètre verrouillé qui est inférieur au diamètre déverrouillé, par fonctionnement de l'ensemble de verrouillage entre ses configurations déverrouillée et verrouillée respectivement.

15. Kit de pièces d'un ensemble de verrouillage comprenant :
• un levier (3 ; 103 ; 203), pour être monté de manière pivotante de sorte qu'il peut pivoter entre une position déverrouillée et une position verrouillée ;
• une pièce de verrouillage (88 ; 188 ; 288), pour être montée de manière pivotante sur le levier de sorte que l'ensemble de verrouillage puisse fonctionner entre une configuration déverrouillée et une configuration verrouillée, par pivotement du levier entre ses positions déverrouillée et verrouillée respectivement ;
• dans lequel le levier comprend des premier et second éléments latéraux (21, 21' ; 121, 121' ; 221, 221'), les premier et second éléments latéraux étant espacés et ayant des côtés internes opposés, dans lequel, à l'égard de chaque élément latéral, un espace de réception (29a, 29a', 29b, 29b' ;
129a, 129a', 129b, 129b' ; 229b, 229b') est prévu dans l'élément latéral, s'étendant en profondeur à partir d'un côté interne, au niveau du côté interne de l'élément latéral, au moins en partie vers un côté externe de l'élément latéral et dans lequel au moins l'un des espaces de réception est une fente de chargement qui s'étend en longueur à partir d'une première extrémité vers une seconde extrémité ;
• un pivot (24a, 24b ; 124a, 124b ; 224b) ayant des premier et second éléments de montage (27a, 27a', 27b, 27b' ; 127a, 127a', 127b, 127b' ;
227b, 227b') et conçu, avec l'au moins une fente de chargement, de sorte que le levier ou la pièce de verrouillage respectif puisse être ainsi monté de manière pivotante par un procédé comprenant :
∘ la réception d'au moins une partie du premier élément de montage dans l'espace de réception du premier élément latéral ;
∘ la réception d'au moins une partie du second élément de montage dans l'espace de réception du second élément latéral ;
∘ dans lequel, à l'égard de chaque élément de montage, l'au moins une partie de l'élément de montage est reçue dans l'espace de réception à travers le côté interne de l'espace de réception et/ou, lorsque l'espace de réception est ladite fente de chargement et si au moins l'une des première et seconde extrémités de la fente de chargement est une extrémité ouverte, à travers ladite extrémité ouverte ;
∘ et, à l'égard de chaque élément de montage, le positionnement de l'élément de montage dans une position de montage ;
∘ dans lequel, à l'égard d'au moins une fente de chargement, l'élément de montage respectif est situé dans la position de montage par déplacement de l'élément de montage par rapport à la fente de chargement, de sorte que l'au moins une partie de l'élément de montage, reçue dans la fente de chargement, se déplace au moins en partie le long de la longueur de la fente de chargement ;
• et, à l'égard d'au moins une fente de chargement, le kit de pièces comprend en outre un dispositif de retenue (22, 22', 222, 222') pour être disposé avec l'élément de montage respectif de sorte que l'élément de montage soit sensiblement retenu, dans la direction de longueur de la fente, dans la position de montage.
